# EUROPEAN PATENT SPECIFICATION

(11) **EP 2 508 379 B1**
(45) Date of publication and mention of the grant of the patent: **03.06.2020**
(21) Application number: 10832921.0
(22) Date of filing: 24.08.2010
(51) Int. Cl.: B60L 1/00

(54) **COOLING SYSTEM FOR ELECTRIC VEHICLE**
KÜHLSYSTEM FÜR EIN ELEKTROFAHRZEUG
SYSTÈME DE REFROIDISSEMENT POUR VÉHICULE ÉLECTRIQUE

(30) Priority: 30.11.2009 JP 2009272306
(43) Date of publication of application: 10.10.2012
(73) Proprietor: Hitachi, Ltd., Chiyoda-ku Tokyo 100-8280 (JP)
(72) Inventor: IMANISHI, Yuto, Chiyoda-ku Tokyo 100-8220 (JP); SAWADA, Itsuro, Chiyoda-ku Tokyo 100-8220 (JP); OSAKA, Tadashi, Chiyoda-ku Tokyo 100-8220 (JP); SEKIYA, Sachio, Chiyoda-ku Tokyo 100-8220 (JP)
(74) Representative: MERH-IP Matias Erny Reichl Hoffmann Patentanwälte PartG mbB
(86) International application number: PCT/JP2010/064278
(87) International publication number: WO 2011/065074

(56) References cited:
- EP-A1- 0 484 548
- JP-A- 11 313 406
- JP-A- H08 258 548
- JP-A- 2002 187 435
- JP-A- 2002 516 206
- JP-A- 2005 041 401
- JP-A- 2005 504 686
- JP-A- 2006 296 193
- JP-A- 2007 125 912
- KR-B1- 100 899 270
- US-A1- 2006 048 984
- US-A1- 2008 060 589

## Description

### TECHNICAL FIELD

The present invention relates to a cooling system for an electric vehicle.

### BACKGROUND ART

An electric vehicle cooling system known in the related art may be used to cool a motor that drives a hybrid vehicle and an inverter power source (see, for instance, patent literature 1).

In EP 0 484 548 A1, an electric automobile with motors for driving wheels and with a refrigerant cycle for indoor air conditioning is described. The refrigerant cycle comprises a compressor, an outdoor heat exchanger, expansion valves and an indoor heat exchanger which are connected to each other one by one with refrigerant piping.

In JP H08 258548 A, an air conditioner for an automobile is described. An aluminum pipe is inserted in laminated fins. At the heating time, low-temperature low-pressure refrigerant and cooling liquid receiving heat by cooling a heating component such as a driving motor, flow separately while meandering and intersecting in the aluminum pipe from the lower part of an external heat exchanger towards the upper part.

In KR 100 899 270 B1, a thermal management system of a fuel cell automobile is described. A first cooling fluid operated by a first circulation pump circulates through a first circulation passage. A second cooling fluid operated by a second circulation pump circulates through a second circulation passage.

In US 2008/060589 A1, a cooling system for a hybrid power system that includes an engine employs an engine cooling circuit to deliver coolant to the engine. The engine cooling circuit includes a radiator and a main fan to draw air through the radiator. When the hybrid power system further includes an inverter, then the inverter is cooled via an inverter cooling circuit that is formulated as one portion of the cooling system to deliver coolant to the inverter.

### CITATION LIST

### PATENT LITERATURE

Patent literature 1: Japanese Laid Open Patent Publication No. H11-285106

### SUMMARY OF THE INVENTION

### TECHNICAL PROBLEM

The patent literature cited above does not disclose any specific positions at which the components of the electric vehicle cooling system may be disposed so as to maximize the efficiency of the cooling system. However, since the positions of these components may greatly affect the efficiency of the cooling system, it is crucial that they be disposed in an optimal positional arrangement.

### SOLUTION TO PROBLEM

According to the 1st aspect of the present invention, as defined in claim 1, a cooling system for an electric vehicle, comprises: a cooling-medium circulation passage through which a cooling medium circulates to travel to heat exchange target objects mounted in a vehicle that is electrically driven; an electric compressor disposed in the cooling-medium circulation passage to compress the cooling medium; and a heat exchange unit that achieves heat exchange between the cooling medium and outside air, wherein: the electric compressor is disposed at a position outside a primary outflow path through which the outside air, having undergone heat exchange at the heat exchange unit, flows from the heat exchange unit to outside the vehicle.

According to the 2nd aspect of the present invention, a cooling system for an electric vehicle, comprises: a cooling-medium circulation passage through which a cooling medium circulates to travel to heat exchange target objects mounted in a vehicle that is electrically driven; an electric compressor disposed in the cooling-medium circulation passage to compress the cooling medium; a heat exchange unit that achieves heat exchange between the cooling medium and outside air; and another cooling-medium circulation passage different from the cooling-medium circulation passage, through which another cooling medium, different from the cooling medium, circulates to travel to electric drive devices including a motor and an inverter power source, wherein: the heat exchange target objects include a middle heat exchange unit that achieves heat exchange between the cooling medium and the other cooling medium; and the middle heat exchange unit is disposed at a position outside a primary outflow path through which the outside air, having undergone heat exchange at the heat exchange unit, flows from the heat exchange unit to outside the vehicle.

According to the 3rd aspect of the present invention, in the cooling system for an electric vehicle according to the 1st aspect, it is preferred that: the cooling system further comprises another cooling-medium circulation passage, different from the cooling-medium circulation passage, through which another cooling medium, different from the cooling medium, circulates to travel to electric drive devices including a motor and an inverter power source; the heat exchange target objects include a middle heat exchange unit that achieves heat exchange between the cooling medium and the other cooling medium; and the middle heat exchange unit is disposed at a position outside the primary outflow path.

According to the 4th aspect of the present invention, in the cooling system for an electric vehicle according to any one of the 1st through 3rd aspects, it is preferred that the cooling-medium circulation passage in a first assembly preassembled prior to installation in the electric vehicle, which includes at least the heat exchange unit, and the cooling-medium circulation passage in a second assembly preassembled prior to installation in the electric vehicle, which includes at least some of the heat exchange target objects, are connected via a coupling so as to allow the cooling-medium circulation passage in the first assembly and the cooling-medium circulation passage in the second assembly, extending frontward and rearward relative to the coupling, to be connected with each other or disconnected from each other via the coupling.

According to the 5th aspect of the present invention, a cooling system for an electric vehicle, comprises: a cooling-medium circulation passage through which a cooling medium circulates to travel to heat exchange target objects mounted in a vehicle that is electrically driven; an electric compressor disposed in the cooling-medium circulation passage to compress the cooling medium; and a heat exchange unit that achieves heat exchange between the cooling medium and outside air, wherein: the cooling-medium circulation passage in a first assembly preassembled prior to installation in the electric vehicle, which includes at least the heat exchange unit, and the cooling-medium circulation passage in a second assembly preassembled prior to installation in the electric vehicle, which includes at least some of the heat exchange target objects, are connected via a coupling so as to allow the cooling-medium circulation passage in the first assembly and the cooling-medium circulation passage in the second assembly to be connected with each other or disconnected from each other at a frontward position and a rearward position of the coupling.

According to the 6th aspect of the present invention, in the cooling system for an electric vehicle according to the 5th aspect, it is preferred that the coupling includes a first coupling via which the cooling medium flows from the first assembly toward the second assembly and a second coupling via which the cooling medium flows from the second assembly toward the first assembly, and the first coupling and the second coupling are both disposed either on an upper side or a lower side of the vehicle.

According to the 7th aspect of the present invention, in the cooling system for an electric vehicle according to the 5th or 6th aspect, it is preferred that the second assembly includes a plurality of the heat exchange target objects, with a heat exchange target object having a low temperature upper limit, among the plurality of heat exchange target objects, is disposed further upstream of cooling medium flow relative to a heat exchange target object having a high temperature upper limit.

According to the 8th aspect of the present invention, a cooling system for an electric vehicle installed in a vehicle electrically driven by electric drive devices and used to cool the electric drive devices, comprises: a heat exchange unit that achieves heat exchange between a cooling medium and outside air; a cooling-medium circulation passage through which cooling medium circulates; an electric compressor disposed in the cooling-medium circulation passage to compress the cooling medium; another cooling-medium circulation passage, different from the cooling-medium circulation passage, through which another cooling medium, different from the cooling medium, circulates to travel to the electric drive devices including a motor and an inverter power source; a middle heat exchange unit that achieves heat exchange between the cooling medium and the other cooling medium, wherein: there is provided a first assembly preassembled prior to installation in the electric vehicle, which includes at least the heat exchange unit; there is provided a second assembly preassembled prior to installation in the electric vehicle, which includes at least the electric compressor and the middle heat exchange unit; and there is provided a third assembly preassembled prior to installation in the electric vehicle, which includes at least the electric drive devices; the cooling-medium circulation passage in the first assembly and the cooling-medium circulation passage in the second assembly are connected via a coupling so as to allow the cooling-medium circulation passage in the first assembly and the cooling-medium circulation passage in the second assembly to be connected with each other or disconnected from each other at a frontward position and a rearward position of the coupling; and the other cooling-medium circulation passage in the second assembly and the other cooling-medium circulation passage in the third assembly are connected via a coupling so as to allow the other circulation passage in the second assembly and the other circulation passage in the third assembly to be connected with each other or disconnected from each other at a frontward position and a rearward position of this coupling.

According to the 9th aspect of the present invention, a cooling system for an electric vehicle installed in a vehicle electrically driven by electric drive devices and used to cool the electric drive devices, comprises: a heat exchange unit that achieves heat exchange between a cooling medium and outside air; a cooling-medium circulation passage through which the cooling medium circulates; an electric compressor disposed in the cooling-medium circulation passage to compress the cooling medium; another cooling-medium circulation passage, different from the cooling-medium circulation passage, through which another cooling medium, different from the cooling medium, circulates to travel to electric drive devices including a motor and an inverter power source; and a middle heat exchange unit that achieves heat exchange between the cooling medium and the other cooling medium, wherein: there is provided a first assembly preassembled prior to installation in the electric vehicle, which includes at least the heat exchange unit, the electric compressor and the middle heat exchange unit; there is provided a second assembly preassembled prior to installation in the electric vehicle, which includes at least the electric drive devices; the other cooling-medium circulation passage in the first assembly and the other cooling-medium circulation passage in the second assembly are connected via a coupling so as to allow the other cooling-medium circulation passage in the first assembly and the other cooling-medium circulation passage in the second assembly to be connected with each other or disconnected from each other at a frontward position and a rearward position of the coupling.

### ADVANTAGEOUS EFFECT OF THE INVENTION

The present invention improves the cooling efficiency of a cooling system installed in an electric vehicle.

### BRIEF DESCRIPTION OF THE DRAWINGS

(FIG. 1) A diagram showing the configuration of a cooling system for an electric vehicle adopting the present invention
(FIG. 2) A schematic view of a vehicle with the electric vehicle cooling system adopting the present invention installed therein, taken from the front
(FIG. 3) A schematic top view of the front side of the vehicle
(FIG. 4) A schematic view of the electric vehicle cooling system installed in a vehicle, taken from a position diagonally to the front of the vehicle
(FIG. 5) A diagram showing how the electric vehicle cooling system assemblies may be systematized
(FIG. 6) An example of a positional arrangement with the inverter power source 2 disposed under the motor 1
(FIG. 7) A diagram pertaining to a variation
(FIG. 8) A diagram pertaining to a variation
(FIG. 9) A diagram pertaining to a variation
(FIG. 10) A diagram pertaining to a variation
(FIG. 11) A diagram pertaining to a variation
(FIG. 12) A diagram showing the structure of the drive system in an electric vehicle adopting the heat cycle system according to the present invention and the electrical connections among the various components in the electric machine drive system constituting part of the drive system

### DESCRIPTION OF EMBODIMENT

The following is a description of an embodiment of the present invention. In the following description of the embodiment, the present invention is adopted in a heat cycle system of a pure electric vehicle that uses an electric motor as its sole drive source.

The structure achieved in the embodiment described below may be adopted in a heat cycle system of an electric vehicle that uses both an internal combustion engine and an electric motor as vehicle drive sources, such as a hybrid vehicle (passenger vehicle), a freight vehicle such as a hybrid truck or a public transportation vehicle such as a hybrid bus.

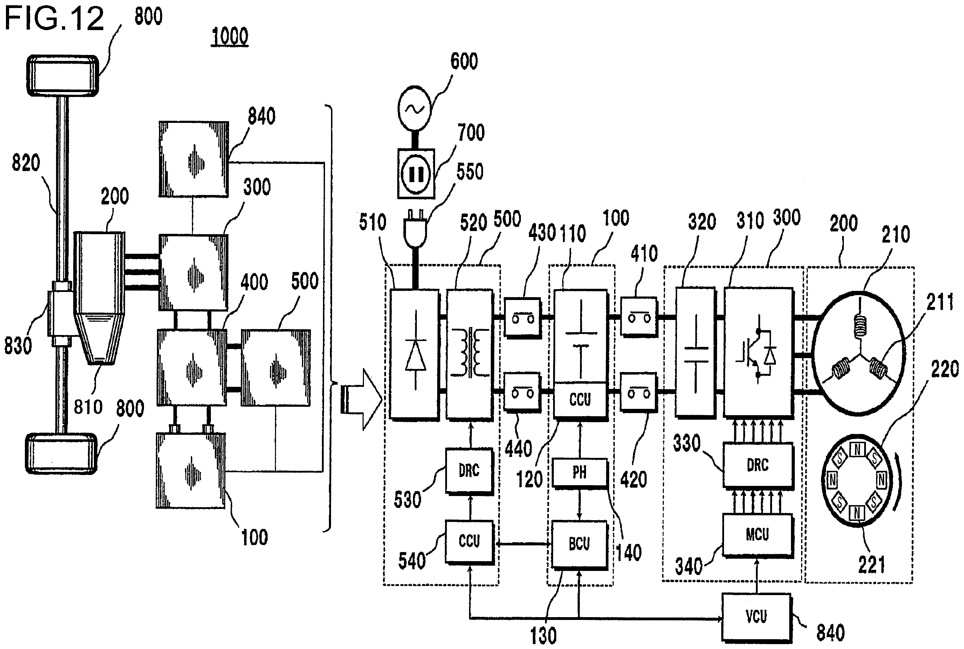

First, in reference to FIG. 12, the electric machine drive system of a pure electric vehicle (hereafter simply referred to as an "EV") adopting the heat cycle system according to the present invention is described.

FIG. 12 shows the structure of the drive system in an EV 1000 and the electrical connections among the various components of the electric machine (motor/generator) drive system constituting part of the drive system.

It is to be noted that the high-power system is indicated with bold solid lines, whereas the low-power system is indicated with thin solid lines in FIG. 12.

An axle 820 is axially supported so as to be allowed to rotate freely at a front part or a rear part of the vehicle body (not shown). A pair of drive wheels 800 are disposed each at one of the two ends of the axle 820. In addition, an axle with a pair of non-drive wheels disposed at the two ends thereof is axially supported so as to be allowed to rotate freely at the rear part or the front part of the body (not shown). While the EV 1000 shown in FIG. 12 is a front wheel drive vehicle with the drive wheels 800 disposed toward the front and the non-drive wheels disposed toward the rear, the present invention may be adopted in a rear wheel drive EV with the drive wheels 800 disposed toward the rear and the non-drive wheels disposed toward the front of the vehicle.

A differential gear (hereafter referred to as a "DEF") 830 is disposed at a central area of the axle 820. The axle 820 is mechanically connected to the output side of the DEF 830. An output shaft of a transmission 810 is mechanically connected to the input side of the DEF 830. The DEF 830 is a differential motive power distribution mechanism that distributes the rotational drive force, the speed of which is altered at the transmission 810 and is then transmitted from the transmission 810, to the left and right sides of the axle 820. The output side of a motor generator 200 is mechanically connected to the input side of the transmission 810.

The motor generator 200 is a rotating electrical machine equipped with an armature (equivalent to the stator in the EV 1000 shown in FIG. 12) 210 with an armature winding 211 disposed thereat and a magnetic field (equivalent to the rotor in the EV 1000 shown in FIG. 12) 220 with permanent magnets 221 disposed thereat, which is disposed so as to face opposite the armature 210 via an air gap. The motor generator 200 functions as a motor when the EV 1000 is engaged in power running operation, whereas it functions as a generator during regenerative operation.

When the motor generator 200 functions as a motor, the electric energy accumulated in a battery 100 is supplied to the armature winding 211 via an inverter device 300. As a result, the motor generator 200 generates rotational motive power (mechanical energy) through magnetic action occurring between the armature 210 and the magnetic field 220. The rotational motive power output from the motor generator 200 is transmitted to the axle 820 via the transmission 810 and the DEF 830 and the drive wheels 800 are thus driven with the rotational motive power.

When the motor generator 200 functions as a generator, the mechanical energy (rotational motive power) transmitted from the drive wheels 800 is transmitted to the motor generator 200 so as to drive the motor generator 200. As the motor generator 200 is driven, interlinkage of the magnetic flux from the magnetic field 200 with the armature winding 211 occurs, thereby inducing a voltage. The motor generator 200 generates electric power through this process. The electric power output from the motor generator 200 is provided to the battery 100 via the inverter device 300. The battery 100 becomes charged with the power thus provided.

The temperature of the motor generator 200, or more specifically, the temperature of the armature 210, is adjusted via a heat cycle system, which is to be described later, so that the temperature remains within an allowable temperature range. While the armature 210, which is a heat generating component, needs to be cooled, it may require warming-up when the ambient temperature is low, in order to assure predetermined electrical characteristics.

The motor generator 200 is driven with the inverter device 300 controlling the electric power between the armature 210 and the battery 100. In other words, the inverter device 300 functions as a control device for the motor generator 200. The inverter device 300 is a power conversion device that converts DC power to AC power or AC power to DC power through switching operation of switching semiconductor elements. It includes a power module 310, a drive circuit 330 that drives the switching semiconductor elements mounted at the power module 310, an electrolytic capacitor 320 that is electrically connected in parallel to the DC side of the power module 310 and smooths a DC voltage, and a motor control device 340 that generates a switching command for the switching semiconductor elements at the power module 310 and outputs a signal corresponding to the switching command to the drive circuit 330.

The power module 310 is a structural unit achieved by mounting six switching semiconductor elements on a substrate and electrically connecting the six switching semiconductor elements through a connecting conductor such as an aluminum wire so as to configure a power conversion circuit constituted with three serial circuits each corresponding to one of three phases and made up with two switching semiconductor elements (an upper arm switching semiconductor element and a lower arm switching semiconductor element) electrically connected with each other in series, which are electrically connected in parallel (in a three-phase bridge connection).

The switching semiconductor elements may be metal oxide film semiconductor field effect transistors (MOSFETs) or insulated gate-type bipolar transistors (IGBTs). A power conversion circuit constituted with MOSFETs does not require an additional diode element to be mounted between the drain electrode and the source electrode of each semiconductor element, since a parasitic diode is present between the drain electrode and the source electrode. However, a power conversion circuit constituted with IGBTs requires an additional diode element to be electrically connected in anti-parallel between the collector electrode and the emitter electrode of each IGBT, since no diode element is present between the collector electrode and the emitter electrode.

The side of each upper arm opposite from the side where it is connected with the lower arm (the collector electrode side in an IGBT) is led out through the DC side of the power module 310 and is electrically connected to the positive pole side of the battery 100. The side of each lower arm opposite from the side where it is connected with the upper arm (the emitter electrode side in an IGBT) is led out through the DC side of the power module 310 and is electrically connected to the negative pole side of the battery 100. The midpoint between each pair of arms, i.e., the connecting point at which the side of the upper arm where it connects with the lower arm (the emitter electrode side of the upper arm constituted with an IGBT) and the side of the lower arm where it connects with the upper arm (the collector electrode side of the lower arm constituted with an IGBT) are connected with each other, is led out through the AC side of the power module 310 and is electrically connected to the winding of the corresponding phase in the armature winding 211.

The electrolytic capacitor 320 is a smoothing capacitor that eliminates an AC component contained in the DC component so as to prevent voltage fluctuation attributable to high-speed switching operation of the switching semiconductor elements and the parasitic inductance in the power conversion circuit. As an alternative to the electrolytic capacitor 320, a film capacitor may be utilized as the smoothing capacitor.

The motor control device 340 is an electronic circuit device that generates a switching command signal (e.g., a PWM (pulse width modulation) signal) for the six switching semiconductor elements in response to a torque command signal output from a vehicle control device 840 which executes overall control for the vehicle and outputs the switching command signal thus generated to the drive circuit 330.

The drive circuit 330 is an electronic circuit device that generates a drive signal for the six switching semiconductor elements upon receiving the switching command signal output from the motor control device 340 and outputs the drive signal thus generated to the gate electrodes of the six switching semiconductor elements.

The temperature at the inverter device or, more specifically, the temperatures at the power module 310 and the electrolytic capacitor 320 are adjusted via the heat cycle system to be described in detail later, so that the temperatures remain within an allowable temperature range. While the power module 310 and the electrolytic capacitor 320, which are heat generating components, need to be cooled, they may sometimes need warming-up, particularly when the ambient temperature is low, in order to assure predetermined operational characteristics and electrical characteristics.

Based upon a plurality of condition parameters indicating the vehicle operating conditions, such as a torque request from the driver (indicated by the extent to which the accelerator pedal is operated or the throttle opening degree) and the vehicle speed, the vehicle control device 840 generates a motor torque command signal for the motor control device 340 and outputs the motor torque command signal to the motor control device 340.

The battery 100 is a power source that provides power used to drive the motor generator 200. It is a high-voltage power source with a nominal output voltage of 200 V or higher and is electrically connected to the inverter device 300 and a charger 500 via a junction box 400. The battery 100 may be a lithium ion battery.

It is to be noted that an electric power storage device other than a lithium ion battery, such as a lead acid battery, a nickel hydride battery, an electric double-layer capacitor or a hybrid capacitor, may be used as the battery 100 instead.

The battery 100 is a power storage device that is charged and discharged via the inverter device 300 and the charger 500. The primary components constituting the battery 100 are a battery unit 110 and a control unit.

The battery unit 110, used as an electric energy storage area, is constituted with a plurality of lithium ion battery cells, in which electric energy can be accumulated or from which electric energy can be released (DC power can be charged/discharged), electrically connected in series. It is electrically connected to the inverter device 300 and the charger 500.

The control unit is an electronic control device constituted with a plurality of electronic circuit components. It manages and controls the conditions of the battery unit 110 and also controls the inflow/outflow of electric energy at the battery unit 110 by providing an allowable charge/discharge quantity, representing the extent to which the battery may be charged/discharged, to the inverter device 300 and the charger 500.

The electronic control device is configured so as to include two separate hierarchical functional layers. Namely, it includes a battery control device 130 designated as a higher order (parent) controller within the battery 100 and a cell control device 120 designated as a lower order (child) controller relative to the battery control device 130.

The cell control device 120 includes a plurality of battery management means for individually managing and controlling the states of the plurality of lithium ion battery cells by working as limbs of the battery control device 130 based upon a command signal output from the battery control device 130. The plurality of battery management means are each constituted with an integrated circuit (IC). The plurality of integrated circuits are each disposed in correspondence to one of several lithium ion battery cell groups into which the plurality of lithium ion battery cells electrically connected in series are divided. Each integrated circuit individually detects the voltages at the plurality of lithium ion battery cells belonging to the corresponding group and any abnormal condition such as an overcharge or an overdischarge occurring at any of the lithium ion battery cells belonging to the corresponding group. In addition, it individually manages and controls the states of the plurality of lithium ion battery cells in the corresponding group so as to ensure the individual lithium ion battery cells in the group achieve matching states of charge by discharging any lithium ion battery cell with an SOC (state of charge) level higher than a predetermined SOC level whenever the states of charge in the plurality of lithium ion battery cells in the particular group are not uniform.

The battery control device 130 is an electronic control device that manages and controls the conditions of the battery unit 110 and controls the inflow/outflow of electric energy at the battery unit 110 by providing an instruction indicating the allowable charge/discharge quantity to the vehicle control device 840 or the motor control device 340. It is equipped with a condition detection means. The condition detection means is constituted with an arithmetic processing device such as a microcomputer or a digital signal processor.

A plurality of signals, including measurement signals output from a current measuring means for measuring the charge/discharge current at the battery unit 110, a voltage measuring means for measuring the charge/discharge voltage at the battery unit 110 and a temperature measuring means for measuring the temperatures at the battery unit 110 and some lithium ion battery cells, detection signals pertaining to the terminal voltages at the plurality of lithium ion batteries, output from the cell control device 120, an error signal output from the cell control device 120, an ON/OFF signal output in response to an ignition switch operation and a signal output from a higher-order control device, i.e., the vehicle control device 840 or the motor control device 340, are input to the condition detection means 1 in the battery control device 130.

Based upon the information carried in the signals input thereto and a plurality of sets of preset information including lithium ion battery cell characteristics information and arithmetic operation information needed when executing arithmetic operation, the condition detection means in the battery control device 130 executes a plurality of types of arithmetic operations including an arithmetic operation through which the state of charge (SOC), the state of health (SOH) and the like at the battery unit 110 are detected, an arithmetic operation executed to balance the SOCs in the plurality of lithium ion battery cells and an arithmetic operation through which the charge/discharge quantity at the battery unit 110 is controlled. Based upon the results of these arithmetic operations, the condition detection means in the battery control device 130 generates a plurality of signals including a command signal for the cell control device 120, a signal pertaining to the allowable charge/discharge quantity, which is to be used to control the charge/discharge quantity at the battery unit 110, a signal related to the SOC in the battery unit 110 and a signal related to the SOH in the battery unit 110, and outputs the signals thus generated.

In addition, based upon the error signal output from the cell control device 120, the condition detection means in the battery control device 130 generates a plurality of signals, including a command signal carrying an instruction for cutting off a first positive pole relay 410 and a first negative pole relay 420 and a notification signal used to notify an abnormal condition, and outputs the signals thus generated.

While the battery control device 130 and the cell control device 120 are able to exchange signals with each other through a signal transmission path, they are electrically insulated from each other, since they use different operation power sources and operate on reference potentials different from each other. In order to assure reliable electrical isolation, an insulator 140, such as a photocoupler, a capacitive coupling element or a transformer, is disposed on the signal transmission path connecting the battery control device 130 with the cell control device 120. Through these measures, the battery control device 130 and the cell control device 120 are able to engage in signal transmission with signals assuming reference potentials different from each other.

The temperature at the battery 100 or, more specifically, the temperature at the battery unit 110, is adjusted via the heat cycle system to be described later so as to ensure that the temperature remains in an allowable temperature range. While the battery unit 110, which is a heat generating component, needs to be cooled, it may require warming-up, particularly when the ambient temperature is low, in order to assure predetermined input/output characteristics.

The electric energy accumulated in the battery 100 is utilized as drive power to drive the electric machine drive system that enables the EV 1000 to engage in traveling operation. Electric energy is accumulated in the battery 100 with regenerative power generated through regenerative operation of the electric machine drive system, power taken in from a commercial residential power source or power purchased at a charging station (an electricity kiosk).

The battery 100 is charged through a commercial residential power source 600 or a power-feed device at an charging station by connecting a power plug 550 at the front end of a power cable, which is electrically connected to an external power source connector terminal of the charger 500, to an outlet 700 located on the commercial residential power source 600 or by connecting a power cable extending from the power-feed device at the charging station to the external power source connector terminal of the charger 500, so as to electrically connect the charger 500 with the commercial residential power source 600 or with the power-feed device at the charging station. Once the electrical connection is established, AC power is supplied from the commercial residential power source 600 or the power-feed device at the charging station to the charger 500. The AC power thus supplied is converted to DC power at the charger 500, which further adjusts the DC power so as to provide it as a charge voltage to the battery 100. As a result, the battery 100 becomes charged.

It is to be noted that the battery 100 is charged with power provided via the power-feed device at the charging station in basically the same manner as that with which the battery 100 is charged via the commercial residential power source 600. However, the capacity of the electric current supplied from the power-feed device at the charging station and the length of time required to charge the battery 100 with the power supplied from the power-feed device at the charging station are different from those of the battery charge via the commercial residential power source 600. Namely, the battery 100 can be charged in less time via the power-feed device at the charging station with a higher current capacity compared to the commercial residential power source 600.

The charger 500 is a power conversion device that converts the AC power supplied from the commercial residential power source 600 or the AC power supplied from the power-feed device at the charging station to DC power, raises the voltage of the DC power resulting from the conversion to a level required of the charge voltage for the battery 100 and supplies the charge voltage to the battery 100. The primary components of the charger 500 include an AC/DC conversion circuit 510, a voltage booster circuit 520, a drive circuit 530 and a charge control device 540.

The AC/DC conversion circuit 510 is a power conversion circuit that converts the AC power supplied from the external power source to DC power and outputs the DC power resulting from the conversion. It may be configured by assembling a plurality of diode elements through a bridge connection. The AC/DC conversion circuit 510 includes a rectifier circuit used to rectify the AC power supplied from the external power source to DC power and a power factor improving circuit electrically connected on the DC side of the rectifier circuit, through which the power factor of the output from the rectifier circuit is improved. Alternatively, AC power may be converted to DC power via a circuit constituted with a plurality of switching semiconductor elements connected in a bridge connection with diode elements connected in an anti-parallel configuration.

The voltage booster circuit 520 is a power conversion circuit that boosts the voltage of the DC power output from the AC/DC conversion circuit 510 (power factor improving circuit) to a level required of the charge voltage for the battery 100, and may be constituted with, for instance, an isolated DC/DC converter. An isolated DC/DC converter comprises a transformer, a conversion circuit that is electrically connected to a primary winding of the transformer, is constituted with a plurality of switching semiconductor elements connected in a bridge connection, converts the DC power output from the AC/DC conversion circuit 510 to AC power and inputs the AC power resulting from the conversion to the primary winding of the transformer, a rectifier circuit that is electrically connected to a secondary winding of the transformer, is constituted with a plurality of diode elements connected in a bridge connection and rectifies AC power generated at the secondary winding of the transformer to DC power, a smoothing reactor that is electrically connected in series to the positive pole side of the output (DC side) of the rectifier circuit and a smoothing capacitor electrically connected in parallel between the positive electrode and the negative electrode on the output side (DC side) of the rectifier circuit.

The charge control device 540 is an electronic circuit device that generates a switching command signal, (e.g., a PWM (pulse width modulation) signal) for the plurality of switching semiconductor elements in the voltage booster circuit 520 based upon a signal input thereto from the vehicle control device 840 or a signal input thereto from a control device in the battery 100 and outputs the switching command signal thus generated to the drive circuit 530, so as to control the timing with which a charge of the battery 100 by the charger 500 ends/starts, and control the power, the voltage, the current and the like supplied from the charger 500 to the battery 100 during the charge and the like. Such a charge control device 540 is configured by mounting a plurality of electronic components including an arithmetic processing device, e.g., a microcomputer, at a circuit substrate.

The vehicle control device 840 monitors the voltage on, for instance, the input side of the charger 500. Upon deciding that the charger 500 has entered a charge start state with the charger 500 electrically connected to the external power source and a voltage applied to the input side of the charger 500, the vehicle control device 840 outputs a charge start command signal to the charge control device 540 so as to start a charge, whereas upon deciding, based upon a battery condition signal output from the control device in the battery 100, that the battery 100 has achieved a fully charged state, the vehicle control device 840 outputs a charge end command signal to the charge control device 540 so as to end the charge. These operations may be executed by the motor control device 340 or the control device in the battery 100, or they may be executed by the charge control device 540 in cooperation with the control device in the battery 100.

The control device in the battery 100 calculates through arithmetic operation an allowable charge quantity for the battery 100 by detecting the conditions of the battery 100 and outputs a signal indicating the arithmetic operation results to the charger 500, so as to control the charge of the battery 100 by the charger 500.

The drive circuit 530, which is an electronic circuit device that generates a drive signal for the plurality of switching semiconductor elements in the voltage booster circuit 520 in response to the command signal output from the charge control device 540 and outputs the drive signal to the gate electrodes of the plurality of switching semiconductor elements, is configured by mounting a plurality of electronic components, such as a switching semiconductor element and an amplifier, at a circuit substrate.

It is to be noted that in a configuration with the AC/DC conversion circuit 510 constituted with switching semiconductor elements, the switching operation of the switching semiconductor elements in the AC/DC conversion circuit 510 is controlled as a switching command signal for the switching semiconductor elements in the AC/DC conversion circuit 510 is output from the charge control device 540 to the drive circuit 530, and a drive signal for the switching semiconductor elements in the AC/DC conversion circuit 510 is output from the drive circuit 530 to the gate electrodes of the switching semiconductor elements in the AC/DC conversion circuit 510.

First and second positive pole side relays 410 and 430 and first and second negative pole side relays 420 and 440 are housed inside the junction box 400.

The first positive pole side relay 410 is a switch via which the electrical connection between the DC positive pole side of the inverter device 300 (power module 310) and the positive pole side of the battery 100 is controlled. The first negative pole side relay 420 is a switch via which the electrical connection between the DC negative pole side of the inverter device 300 (power module 310) and the negative pole side of the battery 100 is controlled. The second positive pole side relay 430 is a switch via which the electrical connection between the DC positive pole side of the charger 500 (voltage booster circuit 520) and the positive pole side of the battery 100 is controlled. The second negative pole side relay 440 is a switch via which the electrical connection between the DC negative pole side of the charger 500 (voltage booster circuit 520) and the negative pole side of the battery 100 is controlled.

The first positive pole side relay 410 and the first negative pole side relay 420 are closed, either in an operation mode in which rotational motive power from the motor generator 200 is needed or in an operation mode in which power needs to be generated at the motor generator 200, whereas they are opened when the vehicle is set in a stop mode (with the ignition switch open), when a fault has occurred in the electric drive device or in the vehicle or when the battery 100 is charged with the charger 500. The second positive pole side relay 430 and the second negative pole side relay 440, on the other hand, are closed when the battery 100 is charged with the charger 500 and are opened when the charging of the battery 100 by the charger 500 ends or when a fault has occurred in the charger 500 or in the battery 100.

The open/close state at the first positive pole side relay 410 and the first negative pole side relay 420 is controlled with an open/close command signal output from the vehicle control device 840. However, the open/close state at the first positive pole side relay 410 and the first negative pole side relay 420 may be controlled with an open/close command signal output from another control device such as the motor control device 340 or a control device in the battery 100. The open/close state at the second positive pole side relay 430 and the second negative pole side relay 440 is controlled with an open/close command signal output from the charge control device 540. However, the open/close state at the second positive pole side relay 430 and the second negative pole side relay 440 may be controlled with an open/close command signal output from another control device such as the vehicle control device 840 or the control device in the battery 100.

As described above, the first positive pole side relay 410 and the first negative pole side relay 420 are disposed between the battery 100 and the inverter device 300 and the second positive pole side relay 430 and the second negative pole side relay 440 are disposed between the battery 100 and the charger 500 in the EV 1000 so as to control the electrical connections among the battery 100, the inverter device 300 and the charger 500. As a result, a high level of safety is assured for the electric drive device which is a high-voltage system.

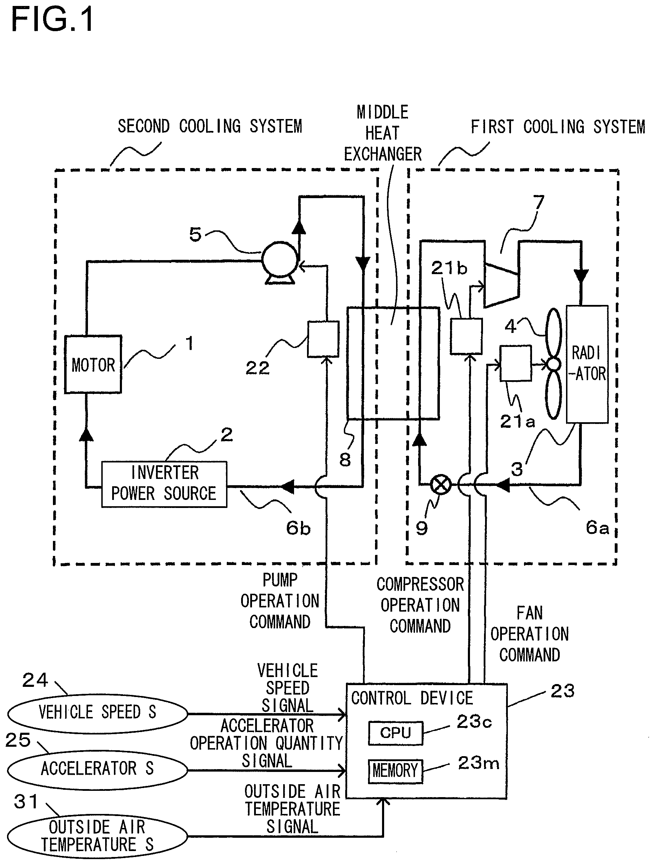

The following is a description of the heat cycle system mounted at the EV 1000 as achieved in an embodiment, given in reference to FIGS. 1 through 6. It is to be noted that as explained earlier, the specific details described below are applicable to electrically-operated vehicles such as hybrid vehicles, electric trains and construction vehicles, as well as pure electric vehicles. In addition, while the present invention is adopted in conjunction with an AC motor driven via an inverter power source in the embodiment described below, the present invention is not limited to applications in AC motors and it may be adopted in conjunction with all types of rotating electrical machines (motor generators) including a DC motor driven via a converter power source such as a thyristor Leonard device and a pulse motor driven via a chopper power source.

FIG. 1 shows the configuration of the cooling system for an electric vehicle achieved in the embodiment. This electric vehicle cooling system comprises a first cooling system that releases the heat in a cooling medium to the outside, and a second cooling system that cools a traveling drive motor 1 (equivalent to the motor generator 200 in FIG. 12) and an inverter power source (inverter) 2 (equivalent to the inverter device 300 in FIG. 12) that drives the motor by exchanging heat with the first cooling system via a middle heat exchanger 8.

The first cooling system includes a radiator 3, a fan 4, a cooling-medium circulation passage 6a, an electric compressor (compressor) 7, the middle heat exchanger 8 and an adjustment valve 9. The cooling medium (refrigerant) circulates through the cooling-medium circulation passage 6a by traveling on a path extending from the middle heat exchanger 8 to the compressor 7, the radiator 3 and the adjustment valve 9 in this order and then returning to the middle heat exchanger 8. This first cooling system constitutes a refrigerating cycle in which a refrigerant for refrigerating cycle such as HFC-134a, is used as a first cooling medium (refrigerant) and the radiator 3, the adjustment valve 9 and the middle heat exchanger 8 respectively function as a condenser, an expansion valve and an evaporator. At the middle heat exchanger 8, the first cooling medium absorbs heat from a second cooling medium (coolant) in the second cooling system. The first cooling medium, having absorbed heat from the second cooling medium is then compressed at the compressor 7, is cooled at the radiator 3 with air blown by the fan 4 and then travels back to the middle heat exchanger 8 via the adjustment valve 9. The middle heat exchanger 8 is the heat exchange target object to be cooled in the first cooling system.

The second cooling system includes a pump 5, a cooling-medium circulation passage 6b, the middle heat exchanger 8 and cooling target objects, i.e., the motor 1 and the inverter power source 2. The second cooling medium circulates through the cooling-medium circulation passage 6b by traveling on a path extending from the pump 5 to the middle heat exchanger 8, the inverter power source 2 and the motor 1 in this order and then returning to the pump 5. The second cooling medium, force-fed from the pump 5, undergoes heat exchange at the middle heat exchanger 8 to exchange heat with the cooling medium in the first cooling system and thus becomes cooled. The second cooling medium then travels to the inverter power source 2 and the motor 1, thereby cooling them before traveling back to the pump 5. In the second cooling system, the motor 1 and the inverter power source 2 are heat exchange target objects to be cooled.

In the embodiment, the second cooling medium, having become cooled through the heat exchange at the middle heat exchanger 8, is first supplied to the inverter power source 2, and after the inverter power source 2 is cooled with the second cooling medium, it is delivered to the motor 1 in this order so as to cool the motor 1. The temperature of a semiconductor power conversion device such as the inverter power source 2 with a smaller thermal time constant compared to that of the motor 1, normally increases quickly and the allowable temperature upper limit of such a semiconductor power conversion device is bound to be lower than that of the motor 1. For this reason, it is desirable to create a cooling-medium circulation path through which the second cooling medium first travels to the inverter power source 2 to cool it and then it travels to the motor 1 to cool the motor 1, as in the embodiment.

It is to be noted that although not shown, the motor 1 and the inverter power source 2 may be connected in parallel to the cooling-medium circulation passage 6b so as to concurrently circulate the second cooling medium force-fed from the pump 5 through the motor 1 and the inverter power source 2 via the middle heat exchanger 8. As a further alternative, a cooling-medium circulation passage for the motor 1 and a cooling-medium circulation passage for the inverter power source 2 may be formed separately with a middle heat exchanger 8 and a pump 5 disposed at each cooling-medium circulation passage.

While the motor 1 and the inverter power source 2 are cooling target objects in the electric vehicle cooling system achieved in the embodiment, either the motor 1 or the inverter power source 2 alone may be designated as a cooling target object. Furthermore, an electricity storage device that exchanges DC power with the inverter power source 2 may be designated as a cooling target object in addition to the motor 1 and the inverter power source 2.

A control device 23 in FIG. 1, constituted with a CPU 23c, a memory 23 and the like, controls a fan drive device 21a, a compressor drive device 21b and a pump drive device 22 and controls cooling of the motor 1 and the inverter power source 2 by executing a cooling control program. A vehicle speed sensor 24 that detects the speed of the vehicle, an accelerator sensor 25 that detects the degree of accelerator pedal operation and the like are connected to the control device 23. The control device 23 individually controls the drive devices based upon signals provided from the various sensors and the like.

### - Positions at which the individual components are disposed -

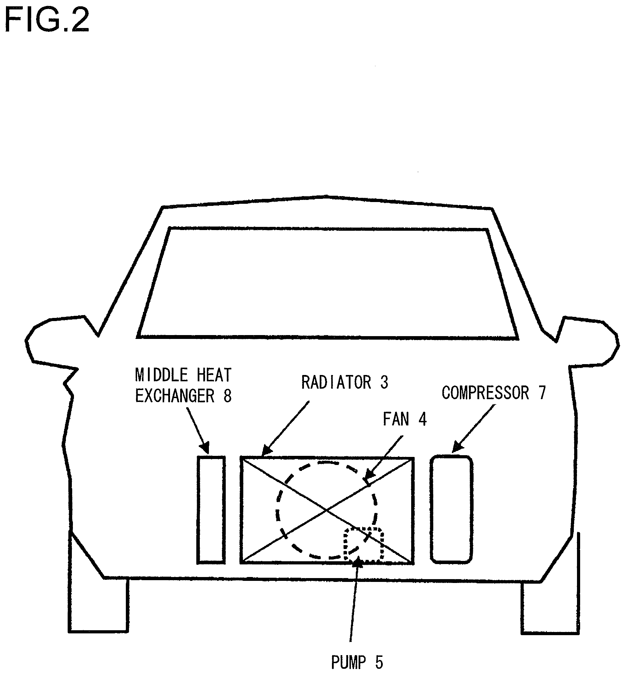

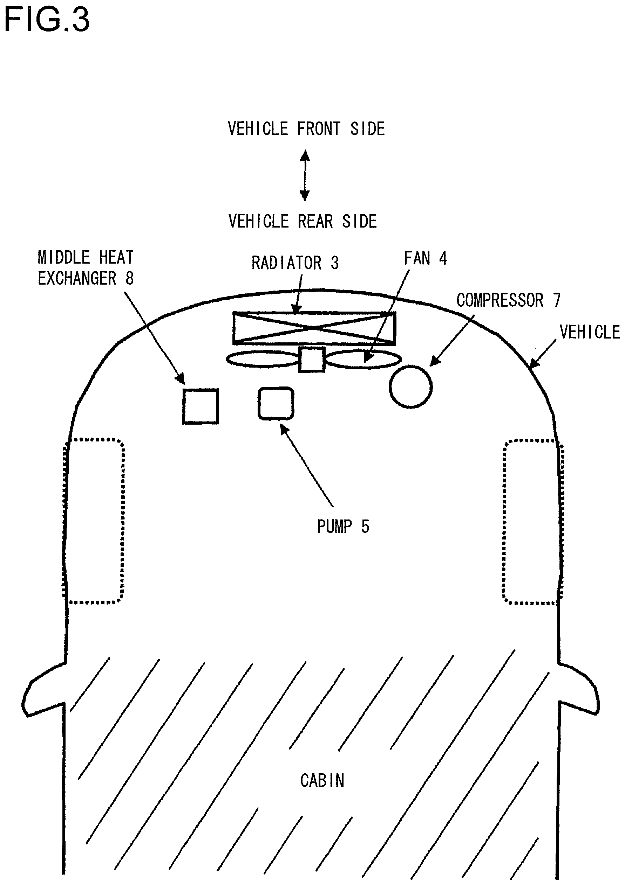

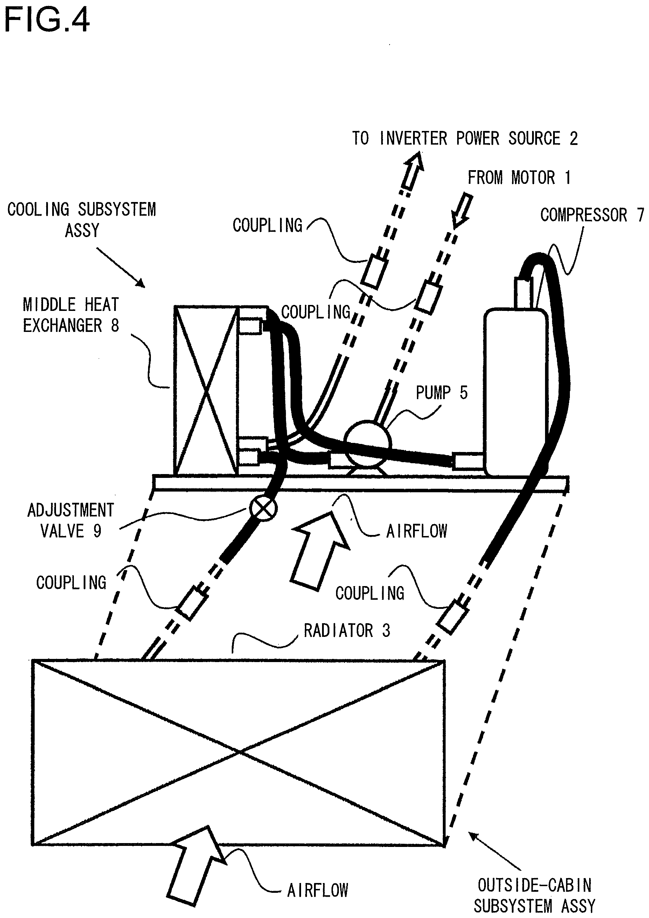

The electric vehicle cooling system achieved in the embodiment by adopting the structure described above is installed in a vehicle as described below. FIG. 2 is a schematic view of a vehicle with the electric vehicle cooling system in the embodiment mounted thereat, taken from the front side, FIG. 3 is a schematic view of the front side of the vehicle, taken from above and FIG. 4 is a schematic view of the electric vehicle cooling system installed in the vehicle, taken from a position diagonally to the front of the vehicle. As shown in FIGS. 2 through 4, the radiator 3 in the electric vehicle cooling system achieved in the embodiment is disposed on the front side of the vehicle so that outside air passes through the radiator 3 as it travels from the front side of the vehicle toward the rear side of the vehicle. In addition, the compressor 7 and the middle heat exchanger 8 are disposed rearward relative to the radiator 3 and offset to the left and to the right of the radiator so that they are not in a primary outflow path through which air, having passed through the radiator 3, travels to flow out of the vehicle.

Since the compressor 7 and the middle heat exchanger 8, which form large projection areas viewed from the front side of the vehicle, are not present in the air outflow path through which air, having passed through the radiator 3 travels, the extent of pressure loss occurring in the air passing through the radiator 3 is reduced so as to improve the efficiency of the cooling system. This positional arrangement is also advantageous in that since the compressor 7 and the middle heat exchanger 8 are outside the air outflow path and thus are not warmed by the air, having passed through the radiator 3 and become warmer, the efficiency of the cooling system is not compromised. It is to be noted that while only either the compressor 7 or the middle heat exchanger 8 alone may be disposed outside the outflow path of air having passed through the radiator 3, it is more desirable to maximize the cooling system efficiency by disposing both the compressor 7 and the middle heat exchanger 8 outside the air outflow path of air having passed through the radiator 3.

The pump 5 is disposed in the outflow path of air having passed through the radiator, since the pump 5, forming a small projection area viewed from the front side of the vehicle, will not be a significant contributing factor in pressure loss in the air passing through the radiator and the pump 5 will not significantly lower the efficiency of the cooling system even if it becomes warmed with air having passed through the radiator 3 and become warmer. In addition, by disposing the pump 5 within the air outflow path, the area to the rear of the radiator 3 can be effectively utilized so as to achieve overall miniaturization of the cooling system. It is to be noted that a component other than the pump 5 disposed as described above in the embodiment that will not adversely affect the cooling system efficiency even if it is disposed within the outflow path of air having passed through the radiator 3, may be disposed further to the rear of the radiator 3 so as to provide the cooling system as a more compact unit.

While FIG. 3, for instance, does not clearly indicate the positions of the motor 1 and the inverter power source 2, the motor 1 and the inverter power source 2 are disposed in a space further to the front relative to the cabin but to the rear of an outside-cabin subsystem ASSY and a cooling subsystem ASSY to be described later. It is to be noted that the motor 1 and the inverter power source 2 may, instead, be disposed to the rear relative to the cabin.

### - Assemblies of various units -

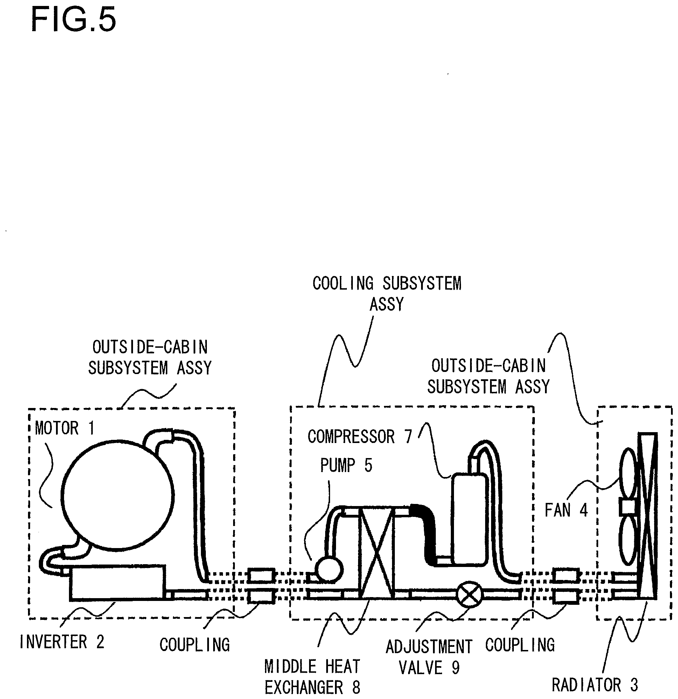

In order to improve the ease with which the electric vehicle cooling system is installed in a vehicle and improve the ease of maintenance, the various subsystems constituting the electric vehicle cooling system in the embodiment are each arranged as an assembly (systematized). FIG. 5 shows an example of assemblies at the electric vehicle cooling system in the embodiment. In the example presented in FIG. 5, the radiator 3 and the fan 4 are assembled into a single assembly to be referred to as an outside-cabin subsystem ASSY, the pump 5, the compressor 7, the middle heat exchanger 8 and the adjustment valve 9 are assembled together into a single assembly to be referred to as a cooling subsystem ASSY, and the motor 1 and the inverter power source 2 are assembled together into a single assembly to be referred to as a heat discharge subsystem ASSY The various components to constitute each ASSY are assembled together and connected via piping or the like so that an integrated ASSY is ready for installation in the vehicle. Since the various ASSYs are each put together in advance before they are installed in the vehicle, the various components in the assemblies do not need to be connected via piping or the like after the ASSYs are installed in the vehicle and components become less accessible. In other words, better ease of assembly is assured.

The ASSYs put together in advance as described above are mounted at a frame (not shown) of the vehicle. It is to be noted that although not shown, a frame for each ASSY, for instance, may be designed so as to facilitate connection with the vehicle frame and, in such a case, the various ASSYs can be mounted in the vehicle with better ease. Once the individual ASSYs are installed in the vehicle, the cooling-medium circulation passages in the ASSYs are connected via coupling means in order to allow the cooling medium to be distributed among the various ASSYs. There are no specific restrictions imposed on the type of couplings used for this purpose. Couplings, often referred to as quick-release couplings, which can be quickly connected and disconnected, or standard couplings other than quick-release couplings may be used.

It is to be noted that the cooling-medium circulation passage of each ASSY is connected with the cooling-medium circulation passage of another ASSY at an area located on the upper side or the lower side of the ASSY so as to facilitate the connection of the cooling-medium circulation passages at the different ASSYs. Namely, the connection area located on the upper side or the lower side of a given ASSY is easily accessible by the technical personnel connecting the cooling-medium circulation passage of the ASSY with the cooling-medium circulation passage of another ASSY after the ASSYs are installed in the vehicle and thus, the connection work is facilitated. It is to be noted that the cooling medium in the cooling-medium circulation passage can be discharged with ease by disengaging the connection area located on the lower side of the ASSY, and thus, the cooling medium can be changed with better ease by setting the connection area on the lower side.

Furthermore, it is desirable to form the connection areas where the cooling-medium circulation passages of two successive ASSYs are connected either on the upper side or on the lower side in order to assure the maximum connection work efficiency. For instance, while the connection areas where the cooling-medium circulation passages of the outside-cabin subsystem ASSY and the cooling subsystem ASSY are connected with each other so as to allow the cooling medium to flow from the outside-cabin subsystem ASSY to the cooling subsystem ASSY and the connection areas where the cooling-medium circulation passages of the cooling subsystem ASSY and the outside-cabin subsystem ASSY are connected with each other so as to allow the cooling medium to flow from the cooling subsystem ASSY to the outside-cabin subsystem ASSY are all located on the lower side of the individual ASSYs in the example presented in FIG. 5, the connection areas may all be set on the upper side of the individual assemblies, instead. Likewise, while the connection areas where the cooling-medium circulation passages of the cooling subsystem ASSY and the heat discharge subsystem ASSY are connected with each other so as to allow the cooling medium to flow from the cooling subsystem ASSY to the heat discharge subsystem ASSY and the connection areas where the cooling-medium circulation passages of the heat discharge subsystem ASSY and the cooling subsystem ASSY are connected with each other so as to allow the cooling medium to flow from the heat discharge subsystem ASSY to the cooling subsystem ASSY are all located on the lower side of the individual ASSYs in the example presented in FIG. 5, the connection areas may all be set on the upper side of the individual ASSYs instead.

It is to be noted that a principle similar to that of locating the cooling-medium circulation passage connection areas on the upper side or the lower side of the individual ASSYs or only either on the upper side or the lower side of the ASSYs to achieve the advantages described above is applicable to electric wiring connection areas. Namely, by disposing electric system wiring connection areas (connectors) on the upper side or the lower side of the various ASSYs or by disposing them only either on the upper side or the lower side of the ASSYs, advantages similar to those described above are achieved. In addition, by disposing the electric system connectors near the cooling-medium circulation passage connection areas, greater ease of assembly can be achieved. It is desirable that an electric system connector be disposed further upward relative to a cooling-medium circulation passage coupling so as to ensure that the electric system connector is never wetted with cooling medium discharged from the cooling-medium circulation passage coupling area during maintenance work.

### - Positional arrangement of the various components in the heat discharge subsystem ASSY -

In the heat discharge subsystem ASSY, the second cooling medium is circulated so as to first travel to the inverter power source 2 to cool the inverter power source 2 and then to the motor 1 to cool the motor 1 as explained earlier. The various components are designed so that, under normal circumstances, the cooling medium flows from the bottom side of the component toward the top side of the component. For this reason, the intake port through which the cooling medium is delivered into the component is normally disposed near the bottom of the component, whereas the outlet port through which the cooling medium is let out is normally disposed near the top of the component. In an electric vehicle cooling system in the related art, the inverter power source 2 is typically disposed at a position higher than the motor 1 and thus, the second cooling medium delivered into the inverter power source 2 through its bottom side and then discharged through the top side of the inverter power source 2 needs to be directed toward the bottom side of the motor 1, disposed further downward relative to the inverter power source 2. This means that a long cooling-medium circulation passage 6b is required, which, in turn, leads to an increase in the volume of the second cooling medium in the cooling-medium circulation passage 6b and an increase in the thermal capacity of the second cooling medium, giving rise to concerns with respect to the cooling temperature response (i.e., the temperature of the second cooling medium cannot be readily lowered at the middle heat exchanger 8) and an increase in the weight.

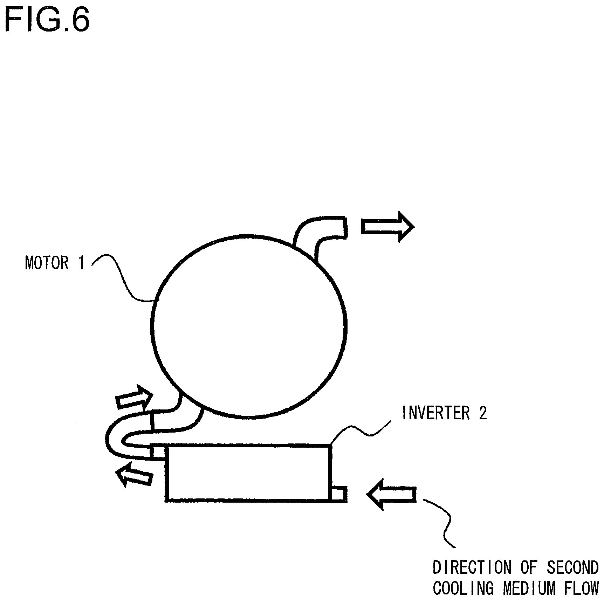

Accordingly, in the heat discharge subsystem ASSY achieved in the embodiment, the inverter power source 2 is disposed below the motor 1, as shown in FIG. 6 so that the second cooling medium, having been discharged through the top side of the inverter power source 2, can easily be directed to a lower area of the motor 1 disposed above the inverter power source 2. This positional arrangement makes it possible to reduce the length of the cooling-medium circulation passage 6b and thus reduce the volume of the second cooling medium in the cooling-medium circulation passage 6b, thereby achieving a decrease in the thermal capacity of the second cooling medium, which, in turn, leads to an improvement in cooling temperature response, and a reduction in the weight of the second cooling medium and makes it possible to provide the electric vehicle cooling system as a lighter-weight unit. It is to be noted that while the order in which the cooling medium is delivered to the individual components, which are disposed one higher than the other, has been described in reference to the motor 1 and the inverter power source 2, this concept is applicable to components other than the motor 1 and the inverter power source 2.

The following advantages are achieved through the electric vehicle cooling system in the embodiment described above.
(1) The compressor 7 and the middle heat exchanger 8, which form large projection areas viewed from the front side of the vehicle, are not disposed within the outflow path through which air having passed through the radiator 3 travels. Through these measures, the extent of pressure loss occurring in the air passing through the radiator 3 is reduced so as to improve the efficiency of the cooling system. In addition, since the compressor 7 and the middle heat exchanger 8 do not come into contact with and thus are not warmed by the air, the temperature of which has risen as it has passed through the radiator 3, the efficiency of the cooling system is sustained.
(2) The pump 5 is disposed in the outflow path of air having passed through the radiator 3. The area to the rear of the radiator 3 is thus effectively utilized to achieve miniaturization of the overall cooling system.
(3) Once the various components constituting the electric vehicle cooling system are installed in the vehicle, access to the individual components becomes limited, as they are bound to be blocked by surrounding components or the like, and assembly work such as piping connection is thus bound to be hindered. However, in the electric vehicle cooling system achieved in the embodiment constituted with subsystems each put together in advance in the form of an assembly, the individual components in each ASSY do not need to be connected via piping or the like after they are mounted in the vehicle but rather, the cooling-medium circulation passages in the various ASSYs can be connected with one another simply by connecting them together via couplings, resulting in improved ease of assembly.
(4) As shown in FIG. 5, the connection areas where the cooling-medium circulation passages of the outside-cabin subsystem ASSY and the cooling subsystem ASSY are connected with each other to allow the cooling medium to flow from the outside-cabin subsystem ASSY to the cooling subsystem ASSY and the connection areas where the cooling-medium circulation passages of the cooling subsystem ASSY and the outside-cabin subsystem ASSY are connected with each other to allow the cooling medium to flow from the cooling subsystem ASSY to the outside-cabin subsystem ASSY are both set either on the lower side or the upper side of the individual ASSYs. Likewise, the connection areas where the cooling-medium circulation passages of the cooling subsystem ASSY and the heat discharge subsystem ASSY are connected with each other to allow the cooling medium to flow from the heat discharge subsystem ASSY to the heat discharge subsystem ASSY and the connection areas where the cooling-medium circulation passages of the heat discharge subsystem ASSY and the cooling subsystem ASSY are connected with each other to allow the cooling medium to flow from the heat discharge subsystem ASSY to the cooling subsystem ASSY are both set either on the lower side or the upper side of the individual ASSYs. As a result, the cooling-medium circulation passages of the ASSYs set next to each other can be connected or disconnected all at once through the bottom side or the top side of the vehicle, which leads to improved ease of operation and maintenance.
(5) The second cooling medium is distributed in a specific order so that it first cools a component with a relatively low limit defining the maximum temperature that can be tolerated thereat is relatively low (i.e., the inverter power source 2) and then cool the component with a relatively high limit defining the maximum temperature that can be tolerated thereat (i.e., the motor 1). As a result, the various components can be cooled with a high level of efficiency. In addition, as the components are cooled efficiently, more heat is taken into the second cooling medium, raising the temperature of the second cooling medium ready to flow into the middle heat exchanger 8. Consequently, the temperature difference between the first cooling medium and the second cooling medium increases, making it possible to allow more heat to be transferred at the middle heat exchanger 8 (increase the amount of heat exchanged) and, ultimately, improve the cooling efficiency of the electric vehicle cooling system.
(6) The inverter power source 2 is disposed below the motor 1 so that the second cooling medium having been discharged through the top side of the inverter power source 2 can be readily delivered to the bottom side of the motor 1 disposed above the inverter power source 2. This positional arrangement makes it possible to reduce the length of the cooling-medium circulation passage 6b and thus reduce the volume of the second cooling medium in the cooling-medium circulation passage 6b, thereby achieving a decrease in the thermal capacity of the second cooling medium, which, in turn, leads to an improvement in the cooling temperature response, and a reduction in the weight of the second cooling medium, and makes it possible to provide the electric vehicle cooling system as a lighter-weight unit.

### - Variations -

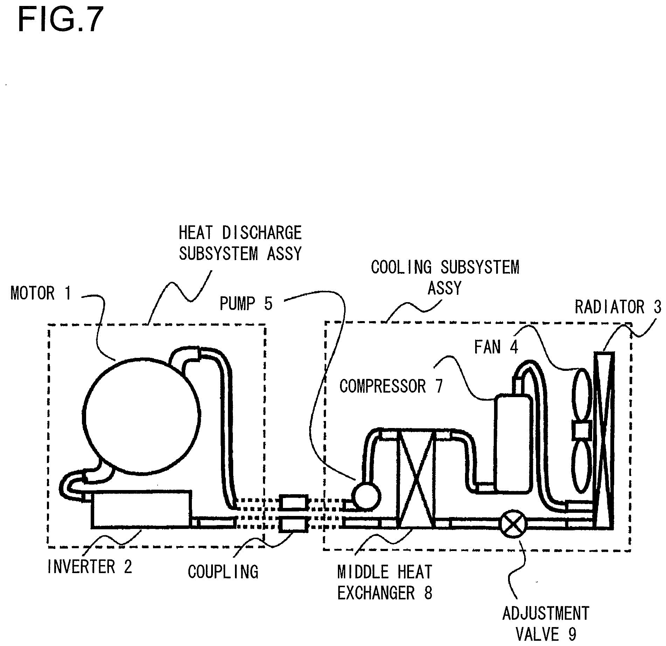

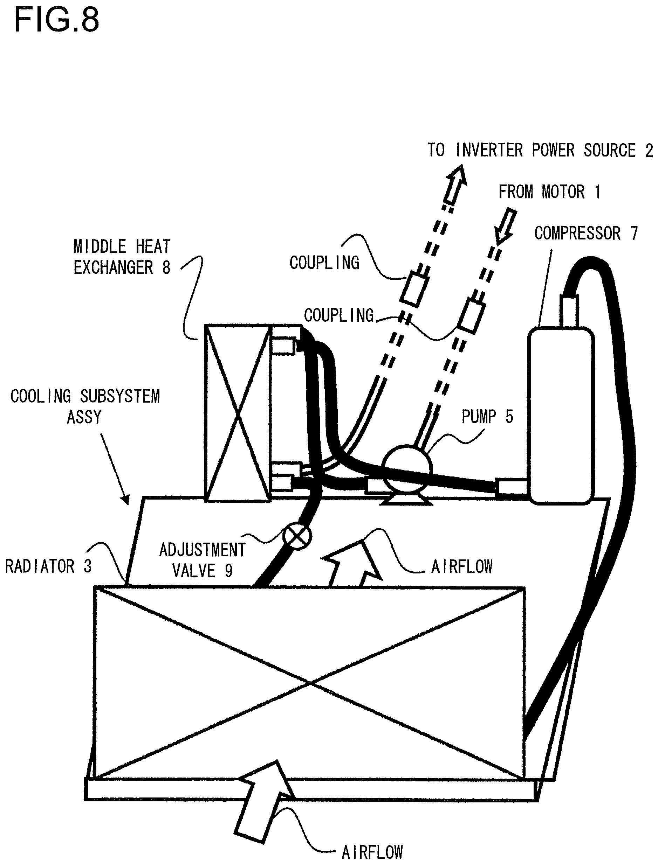

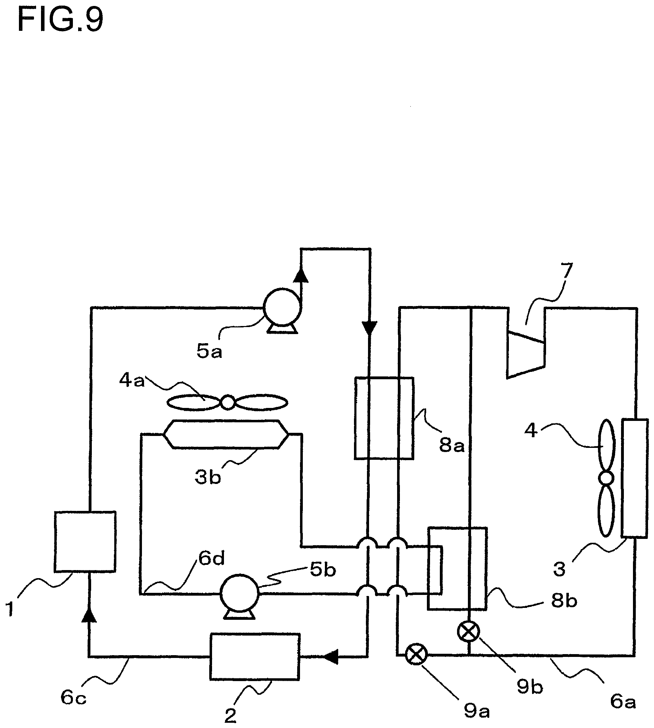

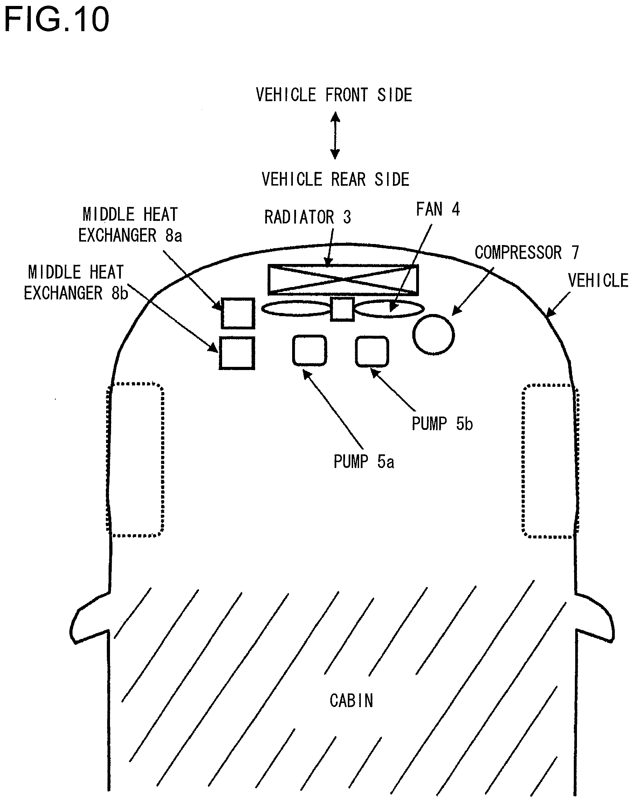

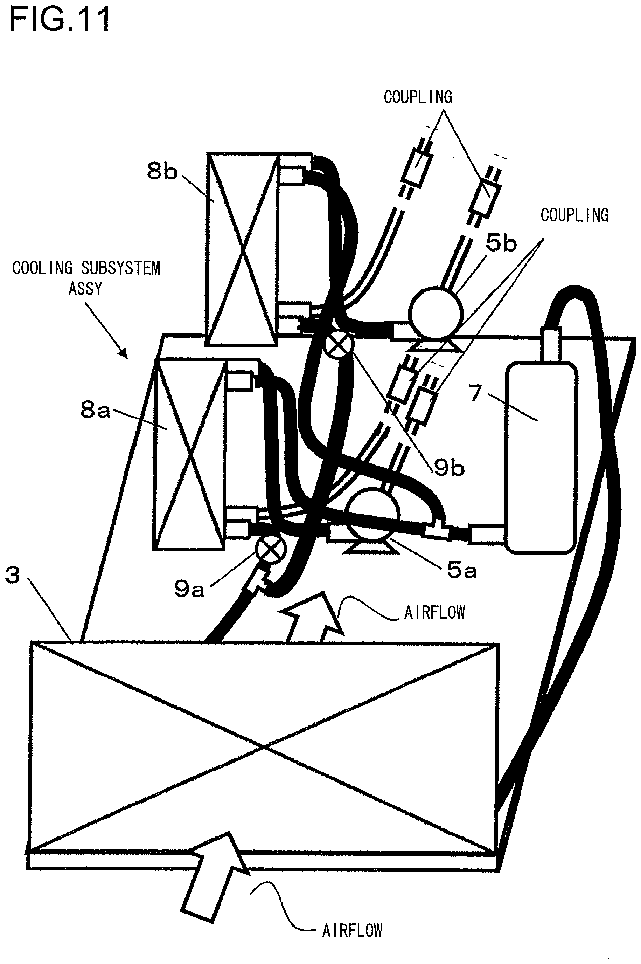

(1) While the radiator 3 and the fan 4 are assembled together so as to constitute the outside-cabin subsystem ASSY, the pump 5, the compressor 7, the middle heat exchanger 8 and the adjustment valve 9 are assembled together so as to constitute the cooling subsystem ASSY and the motor 1 and the inverter power source 2 are assembled together so as to constitute the heat discharge subsystem ASSY in the embodiment described above, the assembling range of the present invention is not limited to this example. For instance, the radiator 3, the fan 4, the pump 5, the compressor 7, the middle heat exchanger 8 and the adjustment valve 9 may be assembled together to constitute a cooling subsystem ASSY and the motor 1 and the inverter power source 2 may be assembled together so as to constitute an heat discharge subsystem ASSY, as shown in FIG. 7. It is to be noted that FIG. 8 provides a schematic view of an electric vehicle cooling system constituted with a cooling subsystem ASSY and an heat discharge subsystem ASSY, such as that shown in FIG. 7, taken from a position diagonally to the front of the vehicle.
(2) While the cooling system described above includes a single middle heat exchanger 8, the present invention is not limited to this example. For instance, the second cooling system may include two separate paths, one constituted with a circulation passage 6c used to cool the cooling target objects and the other constituted with a circulation passage 6d used for purposes of air-conditioning in the temperature of the air within the cabin, with a middle heat exchanger 8a and a middle heat exchanger 8b each disposed in one of the two paths. FIG. 9 shows the configuration of an electric vehicle cooling system with circulation passages forming two separate paths as described above. FIG. 10 is a schematic view of the front side of the vehicle with this electric vehicle: system installed therein, taken from above, whereas FIG. 11 is a schematic view of the electric vehicle cooling system installed in the vehicle, taken from a position diagonally to the front of the vehicle.
   It is to be noted that in FIGS. 9 through 11, the same reference numerals are assigned to components similar to those described earlier and that the following explanation focuses on features differentiating this variation from the embodiment described earlier. In addition, FIGS. 9 through 11 do not include illustrations of the fan drive device 21a, the compressor drive device 21b, the pump drive device 22, the control device 23 and components connected to the control device 23, such as the sensors 24, 25 and 31 and a repeated explanation of these devices and components is not provided.
   In the circulation passage 6c used to cool the cooling target objects, the second cooling medium force-fed from a pump 5a releases its heat at the heat exchanger 8a so as to transfer the heat to the first cooling medium in the first cooling system and then the second cooling medium is sequentially guided to the inverter power source 2 and the motor 1 to cool these cooling target objects. In the cabin internal air-conditioning path 6d, the second cooling medium force-fed from a pump 5b first releases its heat at the heat exchanger 8b so as to transfer the heat to the first cooling medium in the first cooling system and then the second cooling medium travels to a radiator 3b where it absorbs heat from the cabin internal air driven by a fan 4a so as to cool the air inside the cabin.
   In the first cooling system, heat exchange with the second cooling medium in the second cooling system is achieved through two separate paths, with an adjustment valve 9a and the heat exchanger 8a disposed in the cooling target object cooling path and an adjustment valve 9b and the heat exchanger 8b disposed in the cabin internal air-conditioning path. The other components, i.e., the radiator 3, the fan 4, and the compressor 7 are disposed as has been described in reference to the first cooling system.
   Through this cooling system, the electric vehicle drive devices, i.e., the motor 1 and the inverter power source 2, can be cooled and the air inside the cabin can be cooled with a single refrigerating cycle, without having to configure separate refrigerating cycles for cooling the cooling target objects such as the motor 1 and the inverter power source 2 and for cooling the air inside the cabin.
   As shown in FIGS. 10 and 11, the radiator 3 is disposed on the front side of the vehicle so that the outside air passes through the radiator 3 from the front side of the vehicle toward the rear side of the vehicle in the electric vehicle cooling system. In addition, the compressor 7 and the middle heat exchangers 8a and 8b are disposed further rearward relative to the radiator 3 at positions offset to the right and left relative to the position of the radiator 3, outside of the primary outflow path through which air having passed through the radiator 3 flows out to the outside of the vehicle. The pumps 5a and 5b, however, are disposed within the outflow path of air having passed through the radiator 3. It is to be noted that the positional arrangement with which the individual components are disposed, as shown in FIGS. 10 and 11, simply represents an example and that the present invention may be achieved with components disposed with a different positional arrangement. For instance, the right/left positional relationship between the compressor 7 and the middle heat exchangers 8a and 8b may be reversed, the middle heat exchangers 8a and 8b disposed one in front of the other may be disposed side-by-side, or the pumps 5a and 5b disposed side-by-side may be disposed one in front of the other.
(3) While the heat cycle systems in the variations described above include an air-conditioning system through which the condition of the air inside the cabin is adjusted and a temperature control system through which the temperatures of heat generating members such as the battery 100, the motor generator 200 (equivalent to the traveling drive motor 1) and the inverter device 300 (equivalent to the inverter power source 2) are adjusted, the temperature control system may be configured as described below.
   An energy source is required to engage the air-conditioning system and the temperature control system in operation. In the EV 1000, the battery 100, which is the drive power source for the motor generator 200, is used as the energy source for the air-conditioning system and the temperature control system. The electric energy provided from the battery 100 and used up in the air-conditioning system and the temperature control system is relatively high compared to the level of electric energy used in other electric loads.
   A great deal of interest is focused on the EV 1000 because it gives less (zero) harmful effects to the global environmental than hybrid vehicles (hereafter referred to as HEV).
   However, since the EV 1000 is able to travel over only a relatively short distance per battery charge and the required infrastructure, such as charging stations (electric power kiosks), is not yet fully in place, the EV 1000 is yet to gain popularity over HEVs in the marketplace. In addition, since the EV 1000 requires more electric energy than an HEV to travel the required cruising distance, the battery 100 of the EV 1000 must assure a greater capacity than the battery in an HEV. This means that the cost of the battery 100 in the EV 1000 is bound to be higher than the battery in an HEV and, since this raises the price of the vehicle to a level significantly higher than that of a comparable HEV, the EV 1000 is slower in gaining popularity compared to HEVs.
   One of the critical factors that will contribute to acceptance of the EV 1000 by the general public is an increase in the traveling range of the EV on a single charge of the battery 100. In order to increase the range of the vehicle, consumption of electric energy from the battery 100 for purposes other than driving the motor generator 200 needs to be minimized.
   The temperatures of the heat generating devices such as the battery 100, the motor generator 200 and the inverter device 300 are adjusted via the temperature control system so as to keep them within an allowable temperature range. In addition, the output of a heat generating device changes rapidly as load fluctuations occur in the EV 1000 and such a change results in a change in the amount of heat generated. It is desirable that the temperature of the heat generating device be kept at an optimal level at all times by adjusting the temperature control capability for the heat generating device in line with any change in the amount of heat generated at the heat generating device (temperature of the heat generating device) so as to engage the heat generating device in operation with high efficiency.
   At the same time, for the EV 1000 to become accepted more in the marketplace, the costs of the heat generating devices such as the battery 100, the motor generator 200 and the inverter device 300 must be lowered so as to ultimately lower the price of the EV 1000 to that comparable to the price of an HEV. In order to lower the cost of a heat generating device, the heat generating device needs to be miniaturized while assuring a higher output. However, a compact heat generating device capable of providing higher output is bound to generate more heat (higher temperature) which will necessitate an increase in the temperature control capability for the heat generating device.
   Accordingly, the heat cycle system in the variation may be configured by integrating the temperature control system and the air-conditioning system so that the air inside the cabin can be conditioned and the temperatures of the heat generating devices can be controlled by efficiently utilizing the thermal energy within the heat cycle system of the EV 1000.
   In more specific terms, the heat cycle may be divided into a primary side heat cycle (first cooling system) through which heat exchange with the outside (outside the cabin) is achieved and a secondary side heat cycle (second cooling system) through which heat exchange with the inside (inside the cabin) and with the heat generating device side is achieved, the primary side heat cycle may be configured with a refrigerating cycle system, the secondary side heat cycle circuit may be configured with two heat transfer systems in which heat exchange media are distributed independently of each other, a middle heat exchanger 8a and a middle heat exchanger 8b may be respectively disposed between the refrigerating cycle system and one of the two heat transfer systems and between the refrigerating cycle system and the other heat transfer system so as to allow the cooling medium in the refrigerating cycle system to individually exchange heat with the heat exchange media in the two heat transfer systems, and an inside heat exchanger may be disposed in the heat transfer system engaged in heat exchange with the heat generating device side so as to allow the heat exchange medium in the heat transfer system engaged in heat exchange with the heat generating device side to exchange heat with the air taken into the cabin.
   In the temperature control system configured as described above, thermal energy obtained by adjusting the temperatures of the heat generating devices can be utilized for purposes of conditioning the air inside the cabin so as to minimize the energy required for conditioning the air inside the cabin and ultimately achieve a high level of energy efficiency in air-conditioning. Furthermore, in the temperature control system configured as described above, the thermal energy obtained by adjusting the temperatures of the heat generating devices is directly utilized for cabin air-conditioning to further improve the energy efficiency in the cabin air conditioning. Consequently, by configuring the temperature control system as described above, the level of energy taken out to the air-conditioning system from the heat generating device energy source can be kept down.
   The heat cycle system structured as described above is ideal for extending the distance over which the EV 1000 is able to travel after a single charge of the battery 100. From a different perspective, the heat cycle system will prove ideal for minimizing the capacity required of the battery 100 in a vehicle capable of traveling a distance comparable to that achieved in the related art on power provided from the battery 100 after a single charge. The EV 1000 with a smaller capacity battery 100 can be manufactured at lower cost and lighter weight, which will help the EV 1000 gain wider consumer acceptance.
   In addition, in the temperature control system configured as described above in which the thermal energy used for purposes of cabin air conditioning is also utilized in the heat generating device temperature adjustment, the temperature of the heat exchange medium used to adjust the temperatures of the heat generating devices can be adjusted over a wider temperature range. As a result, the temperatures of the heat generating devices can be altered, free of any influence attributable to the surrounding environment conditions. Thus, the temperature of each heat generating device can be adjusted to an optimal level at which the heat generating device is able to operate at high efficiency and the heat generating device can be engaged in operation in a very efficient manner by configuring the temperature control system as described above.
   The heat cycle system described above will prove to be an ideal means for reducing the manufacturing cost of the EV 1000. The marketability of the EV 1000 manufactured at lower cost is bound to improve significantly.
(4) In addition, when a heat cycle system achieved by integrating the temperature control system and the air-conditioning system as in the variation described above is installed in the EV 1000, the piping used to constitute the flow passages and the various components may crowd the limited installation space. In view of requirements such as ease of maintenance, further miniaturization and lower manufacturing costs that heat cycle systems today must fulfill, the system configuration of the heat cycle system installed in the EV 1000 should be simplified as much as possible by miniaturizing components, reducing the number of components and allowing components to be commonly used for multiple purposes.
   Accordingly, the circulation passage in a first heat transfer system, through which the heat exchange medium used to adjust the temperature of the heat generating devices circulates, thermally connected via the middle heat exchanger 8a to the refrigerating cycle system through which the cooling medium circulates, and the circulation passage in a second heat transfer system through which the heat exchange medium used to adjust the condition of the air inside the cabin circulates, thermally connected via the middle heat exchanger 8b to the refrigerating cycle system through which the cooling medium circulates, may be set in communication with each other, and a common reservoir tank, via which the pressures in the circulation passages in the first and second heat transfer systems are adjusted, may be disposed to operate in conjunction with both the first heat transfer system and the second heat transfer system.
   By configuring the temperature control system as described above, a component can be shared by the first and second heat transfer systems, making it possible to simplify the heat cycle system. By simplifying the configuration of the heat cycle system, the ease with which the heat cycle system installed in the EV 1000 is maintained can be improved. Furthermore, such simplification is bound to contribute to achieving miniaturization and lower manufacturing costs for the heat cycle system.
(5) While the electric vehicle cooling system is disposed further frontward relative to the cabin in the embodiment described above, the present invention is not limited to this example. For instance, the electric vehicle cooling system may be disposed further rearward relative to the cabin. It is to be noted that although not shown, the outside air can be delivered to the radiator 3 in the electric vehicle cooling system disposed further rearward relative to the cabin via an air delivery passage formed, for instance, under the floor of the vehicle and extending toward the front and the rear of the vehicle.
(6) While the motor 1 and the inverter power source 2 are cooled with the second cooling medium in the embodiment described above, the present invention is not limited to this example. For instance, the motor 1 and the inverter power source 2 may be cooled with cooling air and the air inside the cabin may be conditioned via the refrigerating cycle. In other words, the configuration described earlier in reference to FIG. 9 does not need to include the cooling target object cooling-medium circulation passage 6c. In such a case, too, the compressor 7 and the middle heat exchanger 8b should be disposed further to the rear of the radiator 3 with offsets to the right and the left relative to the position of the radiator 3 outside of the outflow path of air having passed through the radiator 3 and flowing out of the vehicle so as to achieve advantages similar to those described earlier.
(7) The embodiment and the variations described above may be adopted in any combination.

It is to be noted that the present invention is not limited in any way whatsoever to the structural particulars of the embodiments described above and that a cooling system for an electric vehicle adopting any one of various structures, comprising a cooling-medium circulation passage through which a cooling medium circulates to travel to heat exchange target objects mounted in a vehicle that is electrically driven, an electric compressor disposed in the cooling-medium circulation passage to compress the cooling medium and a heat exchange means for achieving heat exchange between the cooling medium and the outside air and characterized in that the electric compressor is disposed at a position outside a primary outflow path through which the outside air, having undergone heat exchange at the heat exchange means, flows from the heat exchange means to the outside of the vehicle, is within the scope of the present invention.

The present invention is not limited in any way whatsoever to the structural particulars of the embodiment described above and a cooling system for an electric vehicle adopting any one of various structures, comprising a cooling-medium circulation passage through which a cooling medium circulates to travel to heat exchange target objects mounted in a vehicle that is electrically driven, an electric compressor disposed in the cooling-medium circulation passage to compress the cooling medium, a heat exchange means for achieving heat exchange between the cooling medium and the outside air and another cooling-medium circulation passage different from the cooling-medium circulation passage, through which another cooling medium, different from the cooling medium, circulates to travel to electric drive devices including a motor and an inverter power source, and characterized in that the heat exchange target objects include a middle heat exchange means for achieving heat exchange between the cooling medium and the other cooling medium, and that the middle heat exchange means is disposed at a position outside a primary outflow path through which the outside air, having undergone heat exchange at the heat exchange means, flows from the heat exchange means to the outside of the vehicle, is within the scope of the present invention.

The present invention is not limited in any way whatsoever to the structural particulars of the embodiment described above and a cooling system for an electric vehicle adopting any one of various structures comprising a cooling-medium circulation passage through which a cooling medium circulates to travel to heat exchange target objects mounted in a vehicle that is electrically driven, an electric compressor disposed in the cooling-medium circulation passage to compress the cooling medium and a heat exchange means for achieving heat exchange between the cooling medium and the outside air and characterized in that the cooling-medium circulation passage in a first assembly preassembled prior to installation in the electric vehicle, which includes at least the heat exchange means, and the cooling-medium circulation passage in a second assembly preassembled prior to installation in the electric vehicle, which includes at least some of the heat exchange target objects, are connected via a coupling so as to allow the cooling-medium circulation passage in the first assembly and the cooling-medium circulation passage in the second assembly to be connected with each other and disconnected from each other in a frontward position and a rearward position of the coupling, is within the scope of the present invention.

The present invention is not limited in any way whatsoever to the structural particulars of the embodiment described above and a cooling system for an electric vehicle adopting any one of various structures, installed in a vehicle electrically driven by electric drive devices and used to cool the electric drive devices, comprising a heat exchange means for achieving heat exchange between a cooling medium and outside air, a cooling-medium circulation passage through which cooling medium circulates, an electric compressor disposed in the cooling-medium circulation passage to compress the cooling medium, another cooling-medium circulation passage, different from the cooling-medium circulation passage, through which another cooling medium, different from the cooling medium, circulates to travel to the electric drive devices including a motor and an inverter power source, and a middle heat exchange means for achieving heat exchange between the cooling medium and the other cooling medium, configured with a first assembly preassembled prior to installation in the electric vehicle, which includes at least the heat exchange means, a second assembly preassembled prior to installation in the electric vehicle, which includes at least the electric compressor and the middle heat exchange means, and a third assembly preassembled prior to installation in the electric vehicle, which includes at least the electric drive devices, and characterized in that the cooling-medium circulation passage in the first assembly and the cooling-medium circulation passage in the second assembly are connected via a coupling so as to allow the cooling-medium circulation passage in the first assembly and the cooling-medium circulation passage in the second assembly to be connected with each other or to be disconnected from each other in a frontward position and a rearward position of the coupling, and that the other cooling-medium circulation passage in the second assembly and the other cooling-medium circulation passage in the third assembly are connected via a coupling so as to allow the other cooling-medium circulation passage in the second assembly and the other cooling-medium circulation passage in the third assembly to be connected with each other or to be disconnected from each other in a frontward position and a rearward position of this coupling, is within the scope of the present invention.

The present invention is not limited in any way whatsoever to the structural particulars of the embodiments described above and a cooling system for an electric vehicle adopting any one of various structures, installed in a vehicle electrically driven by electric drive devices and used to cool the electric drive devices, comprising a heat exchanging means for achieving heat exchange between a cooling medium and outside air, a cooling-medium circulation passage through which the cooling medium circulates, an electric compressor disposed in the cooling-medium circulation passage to compress the cooling medium, another cooling-medium circulation passage, different from the cooling-medium circulation passage, through which another cooling medium, different from the cooling medium, circulates to travel to electric drive devices including a motor and an inverter power source, and a middle heat exchange means for achieving heat exchange between the cooling medium and the other cooling medium, configured with a first assembly preassembled prior to installation in the electric vehicle, which includes at least the heat exchanging means, the electric compressor and the middle heat exchange means and a second assembly preassembled prior to installation in the electric vehicle, which includes at least the electric drive devices and characterized in that the other cooling-medium circulation passage in the first assembly and the other cooling-medium circulation passage in the second assembly are connected via a coupling so as to allow the other cooling-medium circulation passage in the first assembly and the other cooling-medium circulation passage in the second assembly to be connected with each other and disconnected from each other in a frontward position and a rearward position of the coupling, is within the scope of the invention.

While the invention has been particularly shown and described with respect to a preferred embodiment and variations thereof by referring to the attached drawings, the present invention is not limited to these examples.

## Claims

1. A cooling system for an electric vehicle, comprising:
a first cooling-medium circulation passage (6a) through which a first cooling medium circulates to travel to heat exchange target objects mounted in a vehicle that is electrically driven;
an electric compressor (7) disposed in the first cooling-medium circulation passage (6a) to compress the first cooling medium; and
a heat exchange unit that achieves heat exchange between the first cooling medium and outside air, **characterised in that**
the electric compressor (7) is disposed at a position outside a primary outflow path through which the outside air, having undergone heat exchange at the heat exchange unit, flows from the heat exchange unit to the outside of the vehicle, further comprising:
a second cooling-medium circulation passage (6b), different from the first cooling-medium circulation passage (6a), through which a second cooling medium, different from the first cooling medium, circulates to travel to electric drive devices including a motor (1) and an inverter power source (2),
wherein:
the first cooling-medium circulation passage (6a) in a first assembly configured to be preassembled prior to installation in the electric vehicle, which includes at least the heat exchange unit, and the second cooling-medium circulation passage (6b) in a second assembly configured to be preassembled prior to installation in the electric vehicle, which includes at least some of the heat exchange target objects, are connected via a coupling so as to allow the first cooling-medium circulation passage (6a) in the first assembly and the second cooling-medium circulation passage (6b) in the second assembly, extending frontward and rearward relative to the coupling, to be connected with each other or disconnected from each other via the coupling.

2. A cooling system for an electric vehicle according to claim 1, wherein
the heat exchange target objects include a middle heat exchange unit (8) that achieves heat exchange between the first cooling medium and the second cooling medium; and
the middle heat exchange unit (8) is disposed at a position outside the primary outflow path.

3. A cooling system for an electric vehicle according to claim 1, wherein:
the coupling includes a first coupling via which the cooling medium flows from the first assembly toward the second assembly and a second coupling via which the cooling medium flows from the second assembly toward the first assembly, and the first coupling and the second coupling are both disposed either on an upper side or a lower side of the vehicle.

4. A cooling system for an electric vehicle according to claim 1 or 3, wherein:
the second assembly includes a plurality of the heat exchange target objects, with a heat exchange target object having a low temperature limit, among the plurality of heat exchange target objects, is disposed further upstream of cooling medium flow relative to a heat exchange target object having a high temperature limit.

5. The cooling system according to claim 1 installed in a vehicle electrically driven by electric drive devices, the electric drive devices being the heat exchange target objects, the cooling system further comprising:
a middle heat exchange unit that achieves heat exchange between the first cooling medium and the second cooling medium, wherein:
there is provided a first assembly configured to be preassembled prior to installation in the electric vehicle, which includes at least the heat exchange unit;
there is provided a second assembly configured to be preassembled prior to installation in the electric vehicle, which includes at least the electric compressor (7) and the middle heat exchange unit; and
there is provided a third assembly configured to be preassembled prior to installation in the electric vehicle, which includes at least the electric drive devices; and
the second cooling-medium circulation passage in the second assembly and another cooling-medium circulation passage in the third assembly are connected via a coupling so as to allow the second circulation passage in the second assembly and the other circulation passage in the third assembly to be connected with each other or disconnected from each other at a frontward position and a rearward position of this coupling.

6. The cooling system according to claim 1 installed in a vehicle electrically driven by electric drive devices, the electric drive devices being the heat exchange target objects, the cooling system further comprising:
a middle heat exchange unit that achieves heat exchange between the first cooling medium and the second cooling medium, wherein:
the first assembly configured to be preassembled prior to installation in the electric vehicle, includes at least the heat exchange unit, the electric compressor (7) and the middle heat exchange unit (8);
the second assembly configured to be preassembled prior to installation in the electric vehicle, includes at least the electric drive devices;
the first cooling-medium circulation passage in the first assembly (6a) and the second cooling-medium circulation passage (6b) in the second assembly are connected via a coupling so as to allow the first cooling-medium circulation passage (6a) in the first assembly and the second cooling-medium circulation passage (6b) in the second assembly to be connected with each other or disconnected from each other at a frontward position and a rearward position of the coupling.

## Patentansprüche

1. Kühlsystem für ein Elektrofahrzeug, das Folgendes umfasst:
einen ersten Kühlungsmedium-Zirkulationsdurchlass (6a), durch den ein erstes Kühlungsmedium zirkuliert, um sich zu Wärmeaustausch-Zielobjekten, die in einem Fahrzeug, das elektrisch angetrieben wird, montiert sind, zu bewegen;
einen elektrischen Kompressor (7), der in dem ersten Kühlungsmedium-Zirkulationsdurchlass (6a) angeordnet ist, um das erste Kühlungsmedium zu komprimieren; und
eine Wärmeaustauscheinheit, die einen Wärmeaustausch zwischen dem ersten Kühlungsmedium und der Außenluft vornimmt,
**dadurch gekennzeichnet, dass**
der elektrische Kompressor (7) an einer Position außerhalb eines primären Ausflusswegs angeordnet ist, durch den die Außenluft, die einen Wärmeaustausch bei der Wärmeaustauscheinheit erfahren hat, von der Wärmeaustauscheinheit in die äußere Umgebung des Fahrzeugs strömt, ferner umfassend:
einen zweiten Kühlungsmedium-Zirkulationsdurchlass (6b), der von dem ersten Kühlungsmedium-Zirkulationsdurchlass (6a) verschieden ist und durch den ein zweites Kühlungsmedium, das von dem ersten Kühlungsmedium verschieden ist, zirkuliert, um sich zu elektrischen Antriebsvorrichtungen einschließlich eines Motors (1) und einer Wechselrichter-Leistungsquelle (2) zu bewegen, wobei:
der erste Kühlungsmedium-Zirkulationsdurchlass (6a) in einer ersten Anordnung, die so konfiguriert ist, dass sie vor der Installation in dem Elektrofahrzeug im Voraus zusammengefügt werden kann, und wenigstens die Wärmeaustauscheinheit enthält, und der zweite Kühlungsmedium-Zirkulationsdurchlass (6b) in einer zweiten Anordnung, die so konfiguriert ist, dass sie vor der Installation in dem Elektrofahrzeug im Voraus zusammengefügt werden kann, und wenigstens einige der Wärmeaustausch-Zielobjekte enthält, über eine Kopplung derart verbunden sind, dass es möglich ist, den ersten Kühlungsmedium-Zirkulationsdurchlass (6a) in der ersten Anordnung und den zweiten Kühlungsmedium-Zirkulationsdurchlass (6b) in der zweiten Anordnung, die sich in Bezug auf die Kopplung nach vorn bzw. nach hinten erstrecken, mittels der Kopplung miteinander zu verbinden oder voneinander zu trennen.

2. Kühlsystem für ein Elektrofahrzeug nach Anspruch 1, wobei
die Wärmeaustausch-Zielobjekte eine mittlere Wärmeaustauscheinheit (8), die einen Wärmeaustausch zwischen dem ersten Kühlungsmedium und dem zweiten Kühlungsmedium vornimmt, enthalten; und
die mittlere Wärmeaustauscheinheit (8) an einer Position außerhalb des primären Ausflusswegs angeordnet ist.

3. Kühlsystem für ein Elektrofahrzeug nach Anspruch 1, wobei:
die Kopplung eine erste Kopplung, durch die das Kühlungsmedium von der ersten Anordnung zu der zweiten Anordnung strömt, und eine zweite Kopplung, durch die das Kühlungsmedium von der zweiten Anordnung zu der ersten Anordnung strömt, umfasst und sowohl die erste Kopplung als auch die zweite Kopplung entweder an einer Oberseite oder an einer Unterseite des Fahrzeugs angeordnet sind.

4. Kühlsystem für ein Elektrofahrzeug nach Anspruch 1 oder 3, wobei:
die zweite Anordnung mehrere der Wärmeaustausch-Zielobjekte enthält, wobei ein Wärmeaustausch-Zielobjekt mit einer tiefen Temperaturgrenze unter den mehreren Wärmeaustausch-Zielobjekten weiter stromaufseitig des Stroms des Kühlungsmediums relativ zu einem Wärmeaustausch-Zielobjekt mit einer hohen Temperaturgrenze angeordnet ist.

5. Kühlsystem nach Anspruch 1, das in einem Fahrzeug installiert ist, das durch elektrische Antriebsvorrichtungen elektrisch angetrieben wird, wobei die elektrischen Antriebsvorrichtungen die Wärmeaustausch-Zielobjekte sind, wobei das Kühlsystem ferner Folgendes umfasst:
eine mittlere Wärmeaustauscheinheit, die einen Wärmeaustausch zwischen dem ersten Kühlungsmedium und dem zweiten Kühlungsmedium vornimmt, wobei:
eine erste Anordnung vorgesehen ist, die so konfiguriert ist, dass sie vor einer Installation in dem Elektrofahrzeug im Voraus zusammengefügt werden kann, und wenigstens die Wärmeaustauscheinheit enthält;
eine zweite Anordnung vorgesehen ist, die so konfiguriert ist, dass sie vor einer Installation in dem Elektrofahrzeug im Voraus zusammengefügt werden kann, und wenigstens den elektrischen Kompressor (7) und die mittlere Wärmeaustauscheinheit enthält; und
eine dritte Anordnung vorgesehen ist, die so konfiguriert ist, dass sie vor einer Installation in dem Elektrofahrzeug im Voraus zusammengefügt werden kann, und wenigstens die elektrischen Antriebsvorrichtungen enthält; und
der zweite Kühlungsmedium-Zirkulationsdurchlass in der zweiten Anordnung und ein weiterer Kühlungsmedium-Zirkulationsdurchlass in der dritten Anordnung mittels einer Kopplung derart miteinander verbunden sind, dass es möglich ist, den zweiten Zirkulationsdurchlass in der zweiten Anordnung und den weiteren Zirkulationsdurchlass in der dritten Anordnung an einer vorderen Position bzw. einer hinteren Position dieser Kopplung miteinander zu verbinden oder voneinander zu trennen.

6. Kühlsystem nach Anspruch 1, das in einem Fahrzeug installiert ist, das durch elektrische Antriebsvorrichtungen elektrisch angetrieben wird, wobei die elektrischen Antriebsvorrichtungen die Wärmeaustausch-Zielobjekte sind, wobei das Kühlsystem ferner Folgendes umfasst:
eine mittlere Wärmeaustauscheinheit, die einen Wärmeaustausch zwischen dem ersten Kühlungsmedium und dem zweiten Kühlungsmedium vornimmt, wobei:
die erste Anordnung, die so konfiguriert ist, dass sie vor der Installation in dem Elektrofahrzeug im Voraus zusammengefügt werden kann, wenigstens die Wärmeaustauscheinheit, den elektrischen Kompressor (7) und die mittlere Wärmeaustauscheinheit (8) enthält;
die zweite Anordnung, die so konfiguriert ist, dass sie vor der Installation in dem Elektrofahrzeug im Voraus zusammengefügt werden kann, wenigstens die elektrischen Antriebsvorrichtungen enthält;
der erste Kühlungsmedium-Zirkulationsdurchlass (6a) in der ersten Anordnung und der zweite Kühlungsmedium-Zirkulationsdurchlass (6b) in der zweiten Anordnung mittels einer Kopplung derart miteinander verbunden sind, dass es möglich ist, den ersten Kühlungsmedium-Zirkulationsdurchlass (6a) in der ersten Anordnung und den zweiten Kühlungsmedium-Zirkulationsdurchlass (6b) in der zweiten Anordnung an einer vorderen Position bzw. einer hinteren Position der Kopplung miteinander zu verbinden oder voneinander zu trennen.

## Revendications

1. Système de refroidissement pour un véhicule électrique, comprenant :
un passage de circulation pour premier fluide de refroidissement (6a) à travers lequel circule un premier fluide de refroidissement afin de se déplacer pour effectuer un échange de chaleur avec des objets cibles montés dans un véhicule qui est entraîné électriquement ;
un compresseur électrique (7) disposé dans le passage de circulation pour premier fluide de refroidissement (6a) pour comprimer le premier fluide de refroidissement ; et
une unité d'échange de chaleur qui effectue un échange de chaleur entre le premier fluide de refroidissement et l'air extérieur,
**caractérisé en ce que**
le compresseur électrique (7) est disposé à une position à l'extérieur d'un trajet d'écoulement de sortie primaire via lequel s'écoule l'air extérieur, qui a subi un échange de chaleur au niveau de l'unité d'échange de chaleur, depuis l'unité d'échange de chaleur vers l'extérieur du véhicule, comprenant en outre :
un passage de circulation pour second fluide de refroidissement (6b), différent du passage de circulation pour premier fluide de refroidissement (6a), via lequel circule un second fluide de refroidissement, différent du premier fluide de refroidissement, afin de se déplacer vers des dispositifs d'entraînement électriques incluant un moteur (1) et une source de puissance à onduleur (2), dans lequel
le passage de circulation pour premier fluide de refroidissement (6a) dans un premier assemblage configuré pour être préassemblé avant installation dans le véhicule électrique, qui inclut au moins une unité d'échange de chaleur, et le passage de circulation pour second fluide de refroidissement (6b) dans un second assemblage configuré pour être préassemblé avant installation dans le véhicule électrique, qui inclut au moins certains des objets cibles d'échange de chaleur, sont connectés via un accouplement de manière à permettre au passage de circulation pour premier fluide de refroidissement (6a) dans le premier assemblage et au passage de circulation pour second fluide de refroidissement (6b) dans le second assemblage, qui s'étendent vers l'avant et vers l'arrière par rapport à l'accouplement, d'être connectés l'un à l'autre ou déconnectés l'un vis-à-vis de l'autre via l'accouplement.

2. Système de refroidissement pour un véhicule électrique selon la revendication 1, dans lequel
les objets cibles d'échange de chaleur incluent une unité d'échange de chaleur médiane (8) qui effectue un échange de chaleur entre le premier fluide de refroidissement et le second fluide de refroidissement ; et
l'unité d'échange de chaleur médiane (8) est disposée à une position à l'extérieur du trajet d'écoulement sortant primaire.

3. Système de refroidissement pour un véhicule électrique selon la revendication 1, dans lequel
l'accouplement inclut un premier accouplement via lequel le fluide de refroidissement s'écoule depuis le premier assemblage vers le second assemblage et un second accouplement via lequel le fluide de refroidissement s'écoule depuis le second assemblage vers le premier assemblage, et le premier accouplement et le second accouplement sont tous les deux disposés soit sur un côté supérieur soit sur un côté inférieur du véhicule.

4. Système de refroidissement pour un véhicule électrique selon la revendication 1 ou 3, dans lequel
le second assemblage inclut une pluralité d'objets cibles d'échange de chaleur, avec un objet cible d'échange de chaleur ayant une limite de température basse, parmi la pluralité d'objets cibles d'échange de chaleur, qui est disposé plus loin en amont de l'écoulement du fluide de refroidissement par rapport à un objet cible d'échange de chaleur ayant une limite de température haute.

5. Système de refroidissement selon la revendication 1, installé dans un véhicule entraîné électriquement par des dispositifs d'entraînement électriques, les dispositifs d'entraînement électriques étant les objets cibles d'échange de chaleur, le système de refroidissement comprenant en outre :
une unité d'échange de chaleur médiane qui effectue un échange de chaleur entre le premier fluide de refroidissement et le second fluide de refroidissement, dans lequel :
il est prévu un premier assemblage configuré pour être préassemblé avant installation dans le véhicule électrique, qui inclut au moins l'unité d'échange de chaleur ;
il est prévu un second assemblage configuré pour être préassemblé avant installation dans le véhicule électrique, qui inclut au moins le compresseur électrique (7) et l'unité d'échange de chaleur médiane ; et
il est prévu un troisième assemblage configuré pour être préassemblé avant installation dans le véhicule électrique, qui inclut au moins les dispositifs d'entraînement électriques ; et
le passage de circulation pour second fluide de refroidissement dans le second assemblage et un passage de circulation pour un autre fluide de refroidissement dans le premier assemblage sont connectés via un accouplement de manière à permettre au second passage de circulation dans le second assemblage et à l'autre passage de circulation dans le troisième assemblage d'être connectés l'un à l'autre ou déconnectés l'un vis-à-vis de l'autre à une position en avant et à une position en arrière de cet accouplement.

6. Système de refroidissement selon la revendication 1, installé dans un véhicule entraîné électriquement par des dispositifs d'entraînement électriques, les dispositifs d'entraînement électriques étant les objets cibles d'échange de chaleur, le système de refroidissement comprenant en outre :
une unité d'échange de chaleur médiane qui effectue un échange de chaleur entre le premier fluide de refroidissement et le second fluide de refroidissement, dans lequel
le premier assemblage, configuré pour être préassemblé avant installation dans le véhicule électrique, inclut au moins l'unité d'échange de chaleur, le compresseur électrique (7) et l'unité d'échange de chaleur médiane (8) ;
le second assemblage, configuré pour être préassemblé avant installation dans le véhicule électrique, inclut au moins les dispositifs d'entraînement électriques ;
le passage de circulation pour premier fluide de refroidissement dans le premier assemblage (6a) et le passage de circulation pour second fluide de refroidissement (6b) dans le second assemblage sont connectés via un accouplement de manière à permettre au passage de circulation pour premier fluide de refroidissement (6a) dans le premier assemblage et au passage de circulation pour second fluide de refroidissement (6b) dans le second assemblage d'être connectés l'un à l'autre ou déconnectés l'un vis-à-vis de l'autre à une position en avant et une position en arrière de l'accouplement.
